# EUROPEAN PATENT APPLICATION

(11) **EP 2 811 791 A1**
(43) Date of publication of application: **10.12.2014**
(21) Application number: 14168403.5
(22) Date of filing: 15.05.2014
(51) Int. Cl.: H04W 52/02

(54) **Communication control for power saving**

(30) Priority: 03.06.2013 JP 2013116578
(71) Applicant: FUJITSU LIMITED, Kawasaki-shi, Kanagawa 211-8588 (JP)
(72) Inventor: Saito, Naritoshi, Kawasaki-shi, Kanagawa 211-8588 (JP)
(74) Representative: Ward, James Norman

(57) **Abstract**

A disclosed method includes: determining, by a portable terminal, whether switching from a connection with a first wireless communication system to a connection with a second wireless communication system is effective, based on a communication state with the first wireless communication system or a moving state of the portable terminal; if the switching is effective, transmitting a message to inquire a second base station apparatus included in the second wireless communication system to the first wireless communication system; if the switching is not effective, controlling not to transmit the message; receiving, by the first wireless communication system, the message; upon detecting that there is a cell for the second wireless communication system, which covers the position identified by the message, transmitting data to search for the second base station apparatus of the cell to the portable terminal, and searching for the second base station apparatus according to the received data.

## Description

This invention relates to a power saving technique in a multimode-compatible portable terminal apparatus.

In a field of portable terminal apparatuses such as smart phones and tablet terminals, utilization modes or services increase in which a large amount of data is transferred such as streaming video or TV phone.

The utilization of the multimode-compatible portable terminal apparatuses is expected to be an effective countermeasure for the increase of the communication traffic due to such utilization modes.The multimode-compatible portable terminal apparatus has a function to communicate with plural communication systems respectively in different communication methods. Then, by separately using plural communication system with the multimode-compatible portable terminal apparatus, the entire communication traffic is distributed to respective communication systems.

In order to separately use the plural communication systems, the multimode-compatible portable terminal apparatus that is being connected to one communication system searches for base stations in another comnunication system. A certain publication discloses a technique in which a base station in a public communication network notifies a portable terminal apparatus that approaches a private base station of a frequency used by the private base station. According to this publication, the portable terminal apparatus that approaches the private base station searches for the private base station according to the notified frequency. Therefore, the portable terminal apparatus does not search for the frequency used by the private base station. Moreover, the wasteful search operation in positions where no radio wave from the private base station reaches can be omitted.

However, even in a state that the portable terminal apparatus approaches a base station of a switching destination, when the portable terminal apparatus performs the wasteful search operation, the portable terminal apparatus wastefully consumes the power.

Patent Document 1: Japanese Laid-open Patent Publication No. 2008-278264

As one aspect, an object of this invention is to suppress the power consumption relating to the search for the base stations.

As one aspect, a portable terminal apparatus includes: (A) a determination unit that determines whether switching from a connection with a first wireless communication system to a connection with a second wireless communication system is effective, based on a communication state with a first base station apparatus included in the first wireless communication system or a moving state of the portable terminal apparatus itself; (B) a transmission unit that transmits, upon determining that the switching is effective, a message to inquire a second base station apparatus included in the second wireless communication system, to the first base station apparatus, and omits, upon determining that the switching is not effective, transmission of the message; and (C) a search unit that searches, upon receiving data for searching for the second base station apparatus from the first base station apparatus, for the second base station apparatus according to the received data.

As one aspect, a base station apparatus included in a first wireless communication system includes: (A) a receiving unit that receives a message that includes data representing a position of a portable terminal apparatus and inquires a second base station apparatus included in a second wireless communication system, from the portable terminal apparatus; and (B) a transmission unit that selects, upon detecting that there are plural cells, each of which is created by a second wireless communication system and covers the position identified by the received message, one of plural second base station apparatuses for the plural cells, based on degrees of utilization of the plural second base station apparatuses, and transmits data to search for the selected second base station apparatus to the portable terminal apparatus.

Reference will now be made, by way of example, to the accompanying Drawings, in which:
FIG. 1 is a diagram depicting a hardware configuration example of a multimode-compatible portable terminal apparatus;
FIG. 2 is a diagram depicting a configuration example of a first wireless communication system and a second wireless communication system;
FIG. 3 is a diagram depicting an arrangement example of macro cells and small cells;
FIG. 4 is a diagram depicting an example of two small cells that overlap each other;
FIG. 5 is a diagram depicting an example of two small cells that do not overlap each other;
FIG. 6 is a diagram depicting an example of two small cells created by one second base station apparatus;
FIG. 7 is a diagram depicting an example of a band in the second wireless communication method;
FIG. 8 is a diagram depicting an example of an entire sequence;
FIG. 9 is a diagram depicting a module configuration example of the portable terminal apparatus;
FIG. 10 is a diagram depicting a module configuration example of a first base station apparatus;
FIG. 11 is a diagram depicting a configuration example of a database;
FIG. 12 is a diagram depicting an entire processing flow of the portable terminal apparatus;
FIG. 13 is a diagram depicting an example of a moving vector of the portable terminal apparatus;
FIG. 14 is a diagram depicting a moving vector of the portable terminal apparatus;
FIG. 15 is a diagram schematically depicting an amount of communication traffic;
FIG. 16 is a diagram schematically depicting an amount of communication traffic;
FIG. 17 is a diagram schematically depicting an amount of communication traffic;
FIG. 18 is a diagram schematically depicting an amount of communication traffic;
FIG. 19 is a diagram depicting a determination processing flow;
FIG. 20 is a diagram depicting a transmission processing flow;
FIG. 21 is a diagram depicting an entire processing flow of the first base station apparatus;
FIG. 22 is a diagram depicting a search processing flow;
FIG. 23 is a diagram depicting a switching processing flow;
FIG. 24 is a diagram depicting an entire processing flow of the first base station apparatus relating to a second embodiment;
FIG. 25 is a diagram depicting the entire processing flow of the first base station apparatus relating to the second embodiment;
FIG. 26 is a diagram depicting an entire processing flow of the portable terminal apparatus relating to the second embodiment;
FIG. 27 is a diagram depicting a configuration example of the database relating to a third embodiment;
FIG. 28 is a diagram depicting a configuration example of the first wireless communication system including a first management apparatus and the second wireless communication system including a second management apparatus;
FIG. 29 is a diagramdepictinga configurationexample of a communication system including an integrated management apparatus;
FIG. 30 is a diagram depicting an example of a sequence relating to the update of the database;
FIG. 31 is a diagram depicting an entire processing flow of the first base station apparatus relating to the third embodiment;
FIG. 32 is a diagram depicting an example of an entire sequence relating to a fourth embodiment;
FIG. 33 is a diagram depicting a module configuration example of the first base station apparatus relating to the fourth embodiment;
FIG. 34 is a diagram depicting a module configuration example of the integrated management apparatus; and
FIG. 35 is a functional block diagram of a computer.

### [Embodiment 1]

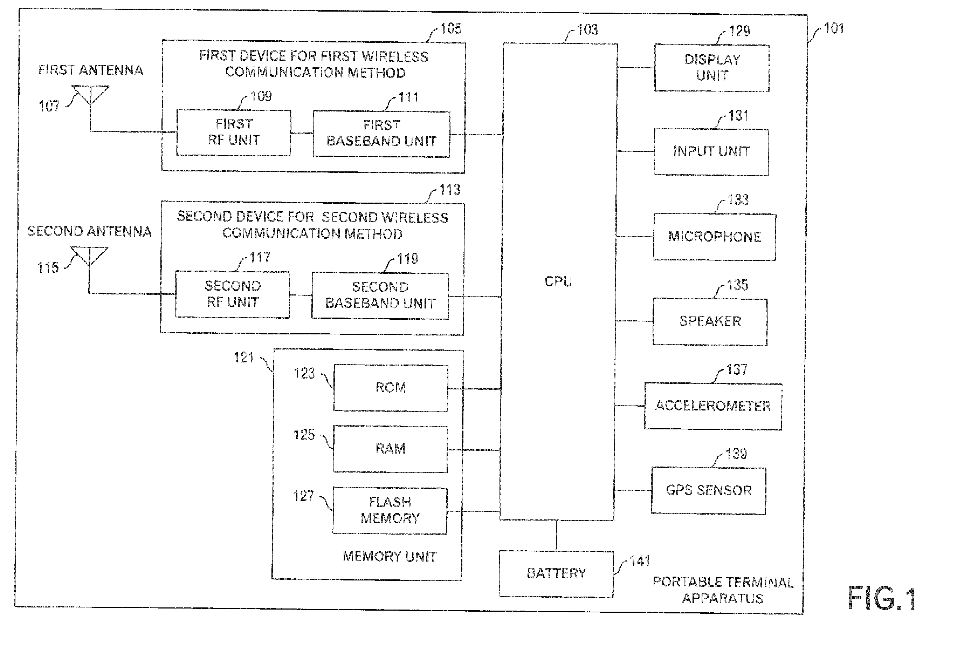

A hardware configuration of a multimode-compatible portable terminal apparatus 101 relating to this embodiment will be explained. FIG. 1 depicts a hardware configuration example of the multimode-compatible portable terminal apparatus 101. The portable terminal apparatus 101 has a Central Processing Unit (CPU) 103, a first device 105 for a first wireless communication method, a first antenna 107, a second device 113 for a second wireless communication method, a second antenna 115, a memory unit 121, a display unit 129, an input unit 131, a microphone 133, a speaker 135, an accelerometer 137, a Global Positioning System (GPS) sensor 139 and a battery 141.

The CPU 103 may include a modem CPU and application CPU.

The portable terminal apparatus 101 has a communication function for the first wireless communication system in the first wireless communication method, and a communication function for the second wireless communication system in the second wireless communication method.

In this example, the first wireless communication method is a method that uses cells having a large area (hereinafter, referred to "macro cell"), and the second wireless communication method is a method that uses cells having a small area (hereinafter, referred to "small cell"). The first wireless communication method may be a 3rd-generation mobile communication method such as Universal Mobile Telecommunications System (UMTS) and Long Term Evolution (LTE) . The second wireless communication method may be a 4th-generation mobile communication method such as LTE-Advanced.

The communication function for the first wireless communication system includes the first device 105 for the first wireless communication method and the first antenna 107. The first device 105 for the first wireless communication method is a device that controls the wireless communication in the first wireless communication method. The first device 105 for the first wireless communication method includes a first Radio Frequency (RF) unit 109 and a first baseband unit 111. The first RF unit 109 modulates a baseband signal to a predetermined frequency band according to the first wireless communication method in the transmission, and demodulates signals in the predetermined frequency band to the baseband signal according to the first wireless communication method in the receiving. The first baseband unit 111 processes the baseband signal before the modulation according to the first wireless communication method in the transmission, and processes the baseband signal after the demodulation according to the first wireless communication method in the receiving.

The communication function for the second wireless communication system includes the second device 113 for the second wireless communication method and the second antenna 115. The second device 113 for the second wireless communication method is a device that controls the wireless communication in the second wireless communication method. The second device 113 for the second wireless communication method includes a second RF unit 117 and a second baseband unit 119. The second RF unit 117 modulates a baseband signal to a predetermined frequency band according to the second wireless communication method in the transmission, and demodulates signals in the predetermined frequency band to the baseband signal according to the second wireless communication method in the receiving. The second baseband unit 119 processes the baseband signal before the modulation according to the second wireless communication method in the transmission, and processes the baseband signal after the demodulation according to the second wireless communication method in the receiving.

The memory unit 121 includes a Read Only Memory (ROM) 123, a Random Access Memory (RAM) 125 and a flash memory 127. The ROM 123 stores programs such as an Operating System (OS) and data regarding the system. The RAM 125 includes an area to expand programs such as application programs. Moreover, the RAM 125 also includes an area to store temporary data. The flash memory 127 stores programs such as application programs, preset application data and user data to be held.

The display unit 129 displays the video and/or static image that are reproduced by an application program, for example.

The input unit 131 is a panel sensor provided on the screen of the display unit 129, for example, and accepts instructions by touch operations.

The microphone 133 converts sounds to analog signals. The microphone 133 is used to input the voice on the phone, for example.

The speaker 135 converts analog signals to sounds. The speaker 135 is used to output voices on the phone and voices generated by reproducing the video, for example.

The accelerometer 137 measures the acceleration and speed. The GPS sensor 139 measures the position.

The battery 141 is rechargeable, for example, and supplies the power to the aforementioned modules.

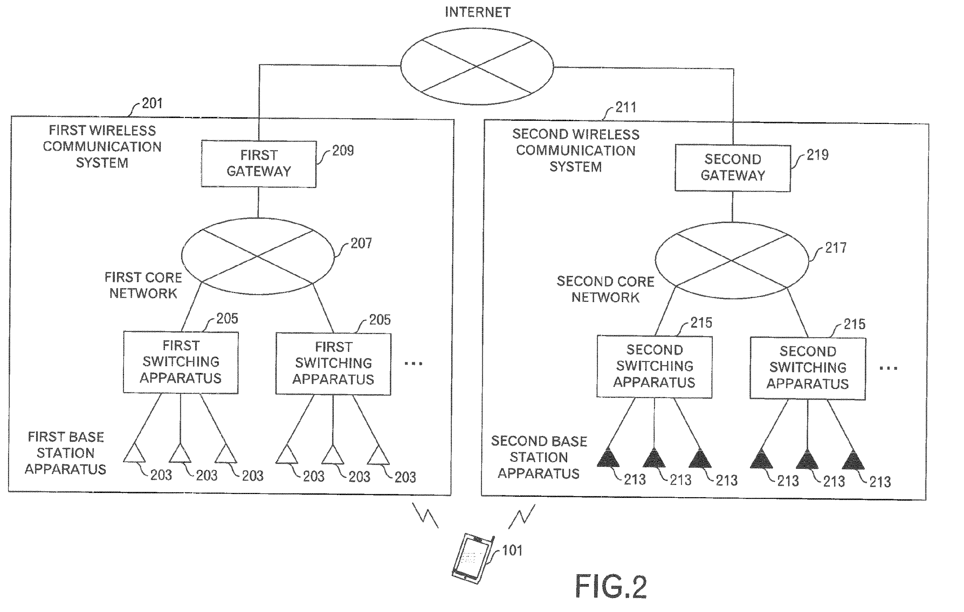

Next, configurations of the first wireless communication system 201 and second wireless communication system 211 will be explained by using FIG. 2. The first wireless communication system 201 and second wireless communication system 211 are operated by the same carrier provider, for example.

The first wireless communication system 201 has first base station apparatuses 203, first switching apparatuses 205, a first core network 207 and a first gateway 209. The first base station apparatus 203 directly communicates with the portable terminal apparatus 101. The first base station apparatuses 203 are connected with the first core network 207 through the first switching apparatuses 205. The first core network 207 is connected with the Internet through the first gateway 209. With this configuration, a service is provided that the portable terminal apparatus 101 connects with the Internet through the first wireless communication system 201.

The second wireless communication system 211 has second base station apparatuses 213, second switching apparatuses 215, a second core network 217 and a second gateway 219. The second base station apparatuses 213 directly communicate with the portable terminal apparatuses 101. The second base station apparatuses 213 are connected with the second core network 217 through the second switching apparatuses 215. The second core network 217 is connected with the Internet through the second gateway 219. With this configuration, a service is provided that the portable terminal apparatus 101 is connectedwith the Internet through the second wireless communication system 211.

On the Internet, Web servers exist that provides services such as streaming video. The portable terminal apparatus 101 may use either of the first wireless communication system 201 and second wireless communication system 211 when accessing such Web server.

Moreover, when the video communication by the TV phone is carried out, the portable terminal apparatus 101 may connects with the Internet through either of the first wireless communication system 201 and second wireless communication system 211.

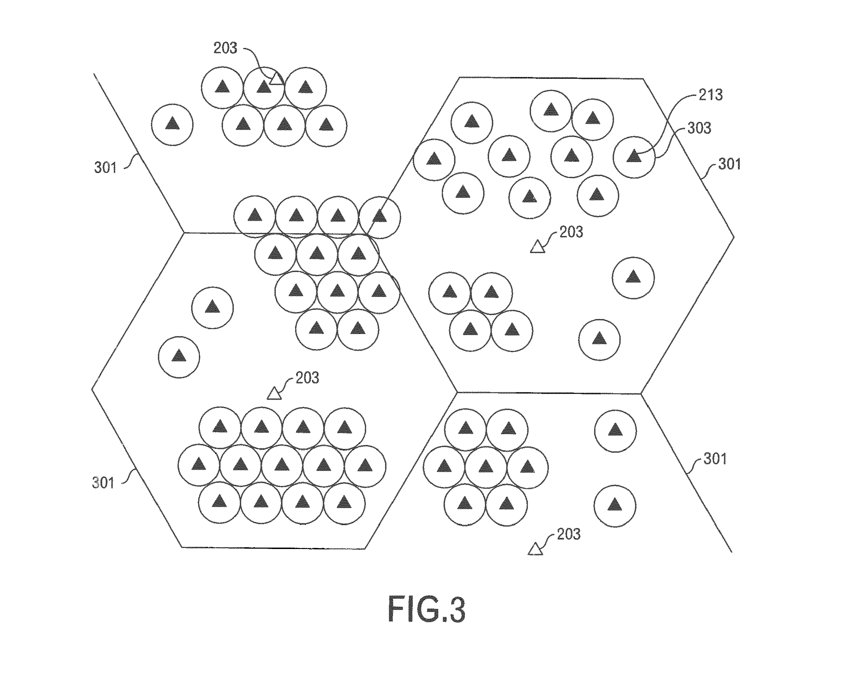

Next, an arrangement of the macro cells and small cells will be explained by using FIG. 3. The macro cell 301 is an area in which radio waves transmitted by the first base station apparatus 203 can reach. The radius of the macro cell 301 is about 1 Km.

The small cell 303 is an area in which the radio wave transmitted by the second base station apparatus 213 reaches. The radius of the small cell 303 is about 100 m. As illustrated in FIG. 3, there are areas that the small cells 303 do not continue. Therefore, the portable terminal apparatus 101 cannot always connect with the second wireless communication system 211.

In the place where the macro cell 301 overlaps with the small cell 303, the portable terminal apparatus 101 can connect with either the first wireless communication system 201 or the second wireless communication system 211. Therefore, even in a state that the portable terminal apparatus 101 connects with the first base station apparatus 203, the portable terminal apparatus 101 detects the second base station apparatus 213 when performing the search. Then, when the second base station apparatus 213 is detected, the portable terminal apparatus 101 may change the connection with the first base station apparatus 203 to the connection with the second base station apparatus 213.

In a place that is not included in the small cells 303, however, is included only in the macro cell 301, the portable terminal apparatus 101 connects with the Internet through the first wireless communication system 201. In such a place, even when the portable terminal apparatus 101 searches for the second base station apparatus 213, the detection of the second base station apparatus 213 is failed.

When the portable terminal apparatus 101 does not grasp whether or not the portable terminal apparatus 101 is included in the small cells 303, the portable terminal apparatus 101 may tentatively search for the second base station apparatus 213. However, the searching for the second base station apparatus 213 in the place where the portable terminal apparatus 101 is not included in any small cells 303 but is included only in the macro cell 301 is wasteful consequentially.

A cell ID is assigned to each small cell 303. Then, the second base station apparatus 213 that transmits the radio wave to the small cell 303 is identified by the cell ID.

Because the second base station apparatus 213 transmits the radio wave in the frequency band that does not overlap with that of other small cells 303, the second base station apparatuses 213 respectively use the different frequencies.

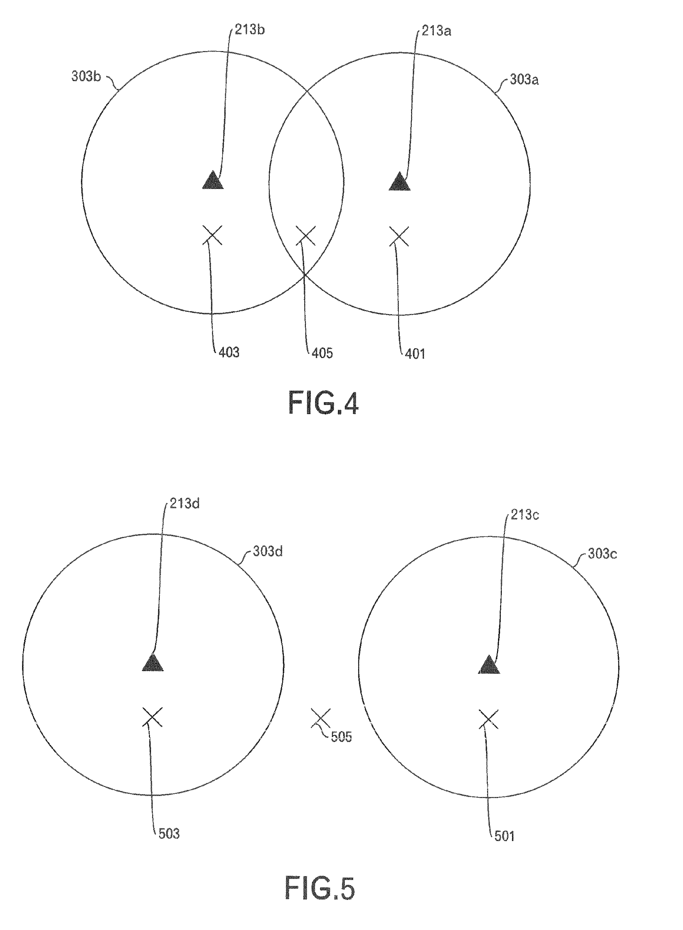

The areas of the plural small cells 303 may overlap. FIG. 4 illustrates an example of two small cells 303 that overlap with each other. The small cell 303a is an area in which the radio wave transmitted by the second base station apparatus 213a reaches. The small cell 303b is an area in which the radio wave transmitted by the second base station apparatus 213b reaches. The small cell 303a and small cell 303b overlap with each other.

The position 401 is included in the small cell 303a, however, is not included in the small cell 303b. The portable terminal apparatus 101 at the position 401 can connect with the second base station apparatus 213a, however, cannot connect with the second base station apparatus 213b.

The position 403 is included in the small cell 303b, however, is not included in the small cell 303a. The portable terminal apparatus 101 at the position 403 can connect with the second base station apparatus 213b, however, cannot connect with the second base station apparatus 213a.

The position 405 is included in both of the small cell 303a and small cell 303b. The portable terminal apparatus 101 at the position 405 can connect withanyof the secondbase station apparatus 213a and second base station apparatus 213b.

The plural small cells 303 may not overlap with each other. FIG. 5 illustrates an example of two small cells 303 that do not overlap with each other. The small cell 303c is an area in which the radio wave transmitted by the second base station apparatus 213c reaches. The small cell 303d is an area in which the radio wave transmitted by the second base station apparatus 213d reaches. As illustrated in FIG. 5, the small cell 303c and small cell 303d do not overlap.

The position 501 is included in the small cell 303c, however, is not included in the small cell 303d. The portable terminal apparatus 101 at the position 501 can connect with the second base station apparatus 213c, however, cannot connect with the second base station apparatus 213d.

The position 503 is included in the small cell 303d, however, is not included in the small cell 303c. The portable terminal apparatus 101 at the position 503 can connect with the second base station apparatus 213d, however, cannot connect with the second base station apparatus 213c.

The position 505 is not included in any of the small cell 303c and small cell 303d. The portable terminal apparatus 101 at the position 505 cannot connect with any of the second base station apparatus 213c and the second base station apparatus 213d.

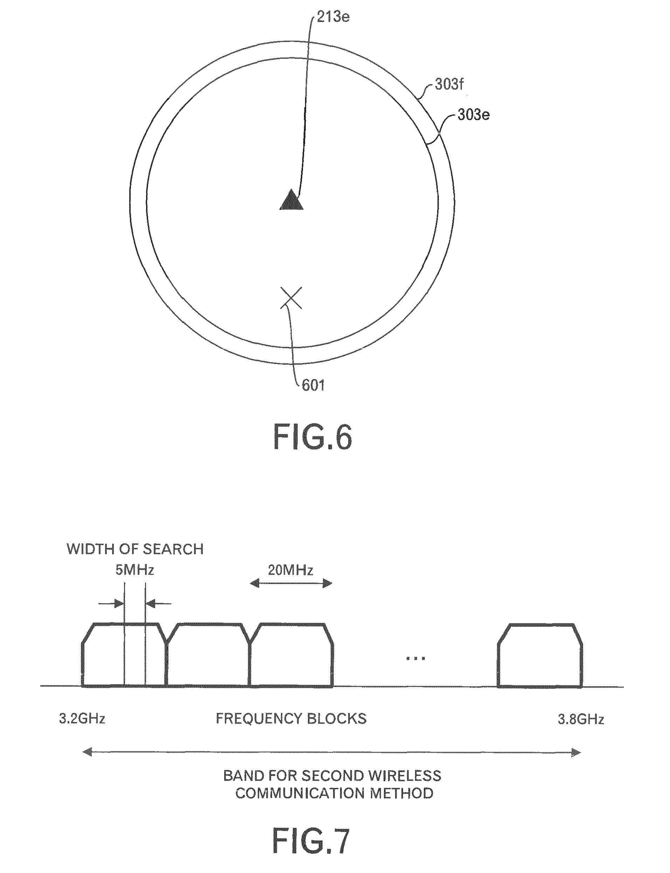

One second base station apparatus 213 may use plural frequencies. FIG. 6 illustrates an example in which plural small cells 303 are arranged by one second base station apparatus 213. The second base station apparatus 213e uses two frequencies.

The small cell 303e is an area in which the radio wave in one frequency, which is transmitted by the second base station apparatus 213e, reaches. In this figure, the small cell 303f is an area in which the radio wave in the other frequency, which is transmitted by the secondbase station apparatus 213e, reaches. In order to represent that plural small cells 303 exist, the radius of the small cell 303f is longer than the radius of the small cell 303e in this example, however, the radius of the small cell 303f may be equal to the radius of the small cell 303e.

The small cell 303e almost overlaps with the small cell 303f. The position 601 is included in both of the small cell 303e and small cell 303f. Therefore, the portable terminal apparatus 101 at the position 601 may connect in any of the frequencies with the second base station apparatus 213e.

Next, a band in the second wireless communication method will be explained by using FIG. 7. In this example, the band in the second wireless communication method extends from 3.2 GHz to 3.8 GHz. The band in the second wireless communication method is divided into plural frequency blocks. In this example, one frequency block has a bandwidth of 20 MHz.

The second base station apparatus 213 uses either of the frequencies included in the band in the secondwireless communication method. When the portable terminal apparatus 101 does not grasp the frequencies used by the second base station apparatus 213, the portable terminal apparatus 101 may tentatively search for the frequencies.

When it is assumed that the search width is 5 MHz, the search is tried 4 times for one frequency block in order to search this one frequency block without any leakage, and the search is tried total 120 times for the band in order to search the entire band without any leakage. In case where it takes 2 seconds for one search, it takes 4 minutes for the entire search.

Thus, tentatively searching, by the portable terminal apparatus 101, for the frequencies used by the second base station apparatuses 213 cannot be performed instantly. Moreover, a large amount of power is consumed. Therefore, the tentatively search of the frequencies is not realistic.

Then, in this embodiment, when the portable terminal apparatus 101 searches for the second base station apparatus 213, the portable terminal apparatus 101 inquires of the first base station apparatus 203 about the second base station apparatuses 213 to be searched, and obtains the frequencies of the second base station apparatuses 213 by the response from the first base station apparatus 203.

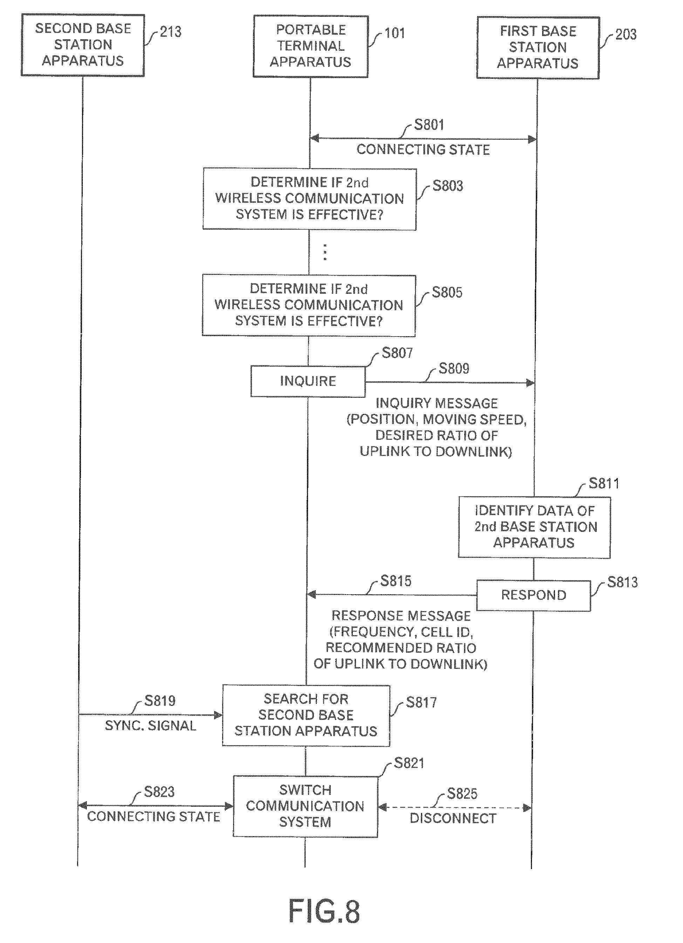

Next, an entire sequence will be explained by using FIG. 8. As illustrated at S801, the portable terminal apparatus 101 is being connected with the first base station apparatus 203 as a premise. Then, the portable terminal apparatus 101 performs an operation to change the connection with the first base station apparatus 203 to the connection with the second base station apparatus 213.

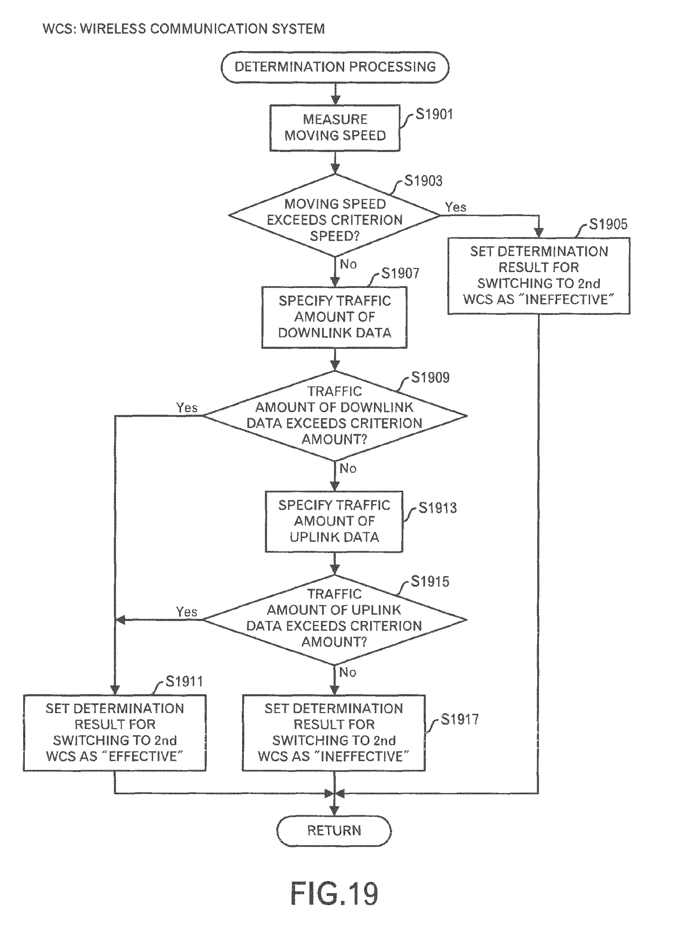

In a state that the portable terminal apparatus 101 connects with the first base station apparatus 203, the portable terminal apparatus 101 determines whether or not the switching to the connection with the second wireless communication system 211 is effective (S803) . For example, the portable terminal apparatus 101 determines based on the communication state with the first base station apparatus 203 or moving state of the portable terminal apparatus 101 itself. The details of this determination processing will be explained later by using FIG. 19.

When it is determined that the switching of the connection is not effective, the portable terminal apparatus 101 further repeats this determination processing. When it is determined at S805 that the switching of the connection is effective, the portable terminal apparatus 101 inquires of the first base station apparatus 203 (S807). The inquiry message transmitted to the first base station apparatus 203 includes the position data, moving speed data and desired ratio of the uplink to the downlink (S809).

The position data represents the position of the portable terminal apparatus 101. The moving speed data represents the moving speed of the portable terminal apparatus 101. The desired ratio of the uplink to the downlink represents a ratio of the uplink transfer rate to the downlink transfer rate, which is suitable for the communication state of the portable terminal apparatus 101.

However, the inquiry message may not include the moving speed data. Moreover, the inquiry message may not include the desired ratio of the uplink to the downlink.

The first base station apparatus 203 specifies data of the second base station apparatus 213 for the small cell 303 that includes the position of the portable terminal apparatus 101 (S811). Then, the first base station apparatus 203 transmits a response message to the portable terminal apparatus 101 (S813). The response message includes a frequency, a cell ID and a recommended ratio of the uplink to the downlink (S815).

This frequency represents a frequency used by the second base station apparatus 213. The cell ID is information to identify the small cell made by the radio wave that is transmitted by the second base station apparatus 213. The recommended ratio of the uplink to the downlink represents a ratio determined to be suitable for the portable terminal apparatus 101 among ratios of the uplink transfer rate to the downlink transfer rate, which can be handled by the second base station apparatus 213.

However, the response message may not include the recommended ratio of the uplink to the downlink.

The portable terminal apparatus 101 searches for the secondbase station apparatus 213 based on the response message (S817). The portable terminal apparatus 101 receives a synchronous signal transmitted by the secondbase station apparatus 213 (S819). The portable terminal apparatus 101 determines, based on the synchronous signal, whether or not the search succeeded.

When the search succeeded, the portable terminal apparatus 101 switches the communication system to be connected (S821). The portable terminal apparatus 101 becomes a state of being connected with the second base station apparatus 213 (S823). Moreover, the portable terminal apparatus 101 disconnects the connection with the first base station apparatus 203 (S825).

As described above, when it is determined that the switching of the connection is not effective, the portable terminal apparatus 101 does not inquire of the first base station apparatus 203 or search for the second base station apparatus 213. Therefore, when the switching of the connection is not effective, the wasteful power is not consumed.

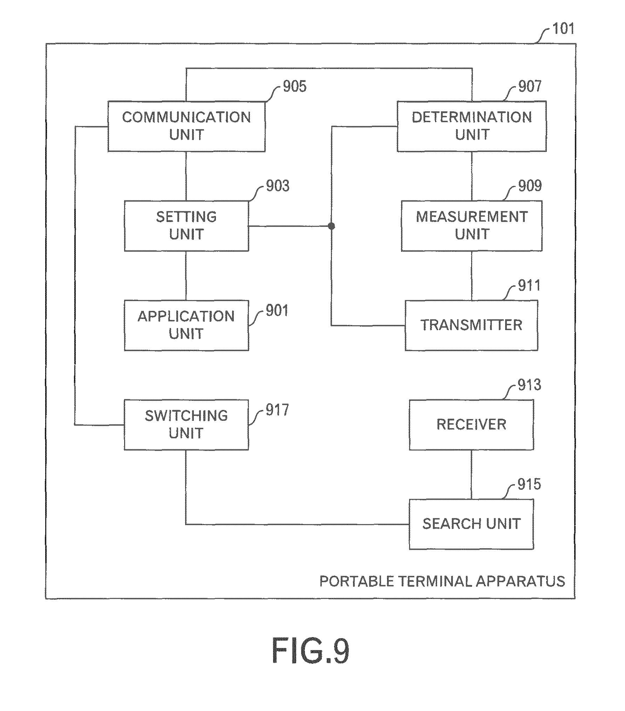

Next, a module configuration of the portable terminal apparatus 101 will be explained by using FIG. 9. The portable terminal apparatus 101 has an applicationunit 901, a settingunit 903 , a communication unit 905, a determination unit 907, a measurement unit 909, a transmitter 911, a receiver 913, a search unit 915 and a switching unit 917.

The application unit 901 performs an application processing such as streaming video or TV phone. A Web browser is one of the application units 901. The downlink transfer rate and uplink transfer rate is set to the setting unit 903 by the applicationunit 901. The communication unit 905 performs communication according to the transfer rate set in the setting unit 903.

The determination unit 907 determines, based on the communication state with the first base station apparatus 203 or the moving state of the portable terminal apparatus 101 itself, whether or not the switching from the connection with the first wireless communication system 201 to the connection with the second wireless communication system 211 is effective. The measurement unit 909 measures the position and moving speed of the portable terminal apparatus 101.

When it is determined that the switching of the connection is effective, the transmitter 911 transmits a message to inquire of the first base station apparatus 203 about the second base station apparatus 213 to be searched for, and when it is determined that the switching is not effective, the transmitter 911 omits the transmission of the message to inquire about the second base station apparatus 213 to be searched for.

The receiver 913 receives the response message from the first base station apparatus 203. The search unit 915 searches for the second base station apparatuses 213 based on the response message. The switching unit 917 changes the connection with the first base station apparatus 203 to the connection with the second base station apparatus 213.

The application unit 901, setting unit 903, communication unit 905, determination unit 907, measurement unit 909, transmitter 911, receiver 913, search unit 915 and switching unit 917 are realized by a combination of the hardware resources illustrated in FIG. 1 and programs stored in the memory unit 121.

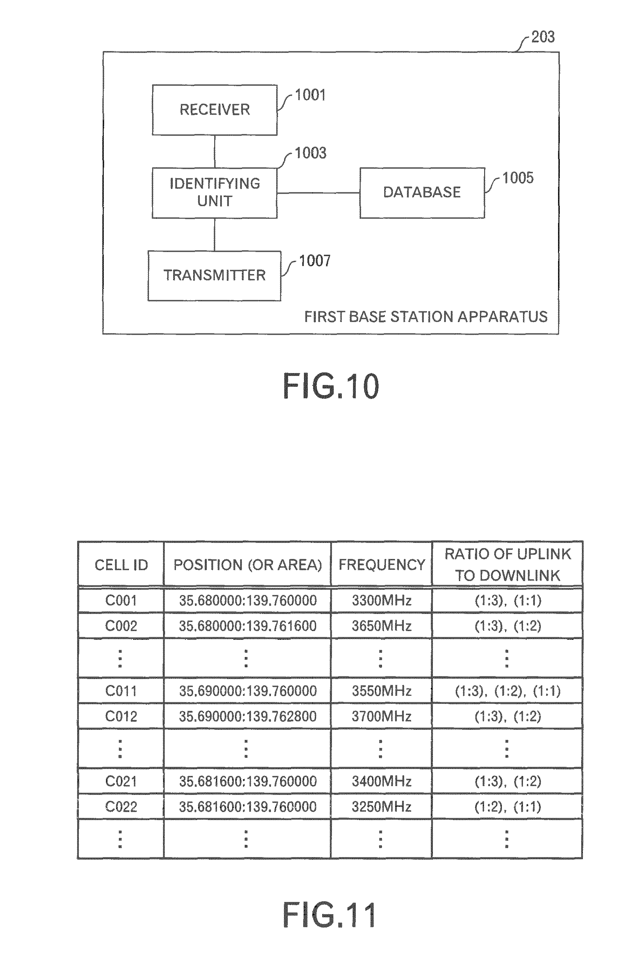

Next, a module configuration of the first base station apparatus 203 will be explained by using FIG. 10. The first base station apparatus 203 has a receiver 1001, an identifying unit 1003, a database 1005 and a transmitter 1007.

The receiver 1001 receives an inquiry message. The identifying unit 1003 identifies data of the second base station apparatus 213 to be searched for in response to the inquiry message. The database 1005 stores data about the second base station apparatuses 213.

Next, a configuration of the database 1005 will be explained by using FIG. 11. The database 1005 has records corresponding to the second base station apparatuses 213 for the small cells 303 that are covered or overlapped with the macro cell 301 caused by the first base station apparatus 203. Moreover, each record in the database 1005 includes fields of a cell ID, a position (or area), a frequency and a ratio of the uplink to the downlink.

The field of the cell ID stores data to identify the cell derived by the pertinent second base station apparatus 213. The field of the position (or area) stores data to identify the position of the pertinent second base station apparatus 213 or area of the small cell 303. In this example, the position of the pertinent second base station apparatus 213 is set. The field of the frequency stores the frequency used by the pertinent second base station apparatus 213. The field of the ratio of the uplink to the downlink stores the ratio of the uplink transfer rate to the downlink transfer rate.

The first record in FIG. 11 represents that the latitude and longitude that represent the position of the second base station apparatus 213 identified by the cell ID "C001" are "35.680000" and "139.760000". Moreover, the first record represents that the second base station apparatus 213 uses the frequency "3300 MHz" and is compatible for the ratio "1:3" of the uplink transfer rate to the downlink transfer rate and the ratio "1:1" of the uplink transfer rate to the downlink transfer rate.

The second record in FIG. 11 represents that the latitude and longitude that represent the position of the second base station apparatus 213 identified by the cell ID "C002" are "35.680000" and "139.761600". Moreover, the second record represents that the second base station apparatus 213 uses the frequency "3650 MHz" and is compatible for the ratio "1:3" of the uplink transfer rate to the downlink transfer rate and the ratio "1:2" of the uplink transfer rate to the downlink transfer rate.

The third record in FIG. 11 represents that the latitude and longitude that represent the position of the second base station apparatus 213 identified by the cell ID "C011" are "35.690000" and "139.760000". Moreover, the third record represents that the second base station apparatus 213 uses the frequency "3550 MHz" and is compatible for the ratio "1:3" of the uplink transfer rate to the downlink transfer rate, the ratio "1:2" of the uplink transfer rate to the downlink transfer rate and the ratio "1:1" of the uplink transfer rate to the downlink transfer rate.

The fourth record in FIG. 11 represents that the latitude and longitude that represent the position of the second base station apparatus 213 identified by the cell ID "C012" are "35.690000" and "139.762800". Moreover, the fourth record represents that the second base station apparatus 213 uses the frequency "3700 MHz" and is compatible for the ratio "1:3" of the uplink transfer rate to the downlink transfer rate and the ratio "1:2" of the uplink transfer rate to the downlink transfer rate.

The fifth record in FIG. 11 represents that the latitude and longitude that represent the position of the second base station apparatus 213 identified by the cell ID "C021" are "35.681600" and "139.760000". Moreover, the fifth record represents that the second base station apparatus 213 uses the frequency "3400 MHz" and is compatible for the ratio "1:3" of the uplink transfer rate to the downlink transfer rate and the ratio "1:2" of the uplink transfer rate to the downlink transfer rate.

The sixth record in FIG. 11 represents that the latitude and longitude that represent the position of the second base station apparatus 213 identified by the cell ID "C022" are "35.681600" and "139.760000". Moreover, the sixth record represents that the second base station apparatus 213 uses the frequency "3250 MHz" and is compatible for the ratio "1:2" of the uplink transfer rate to the downlink transfer rate and the ratio "1:1" of the uplink transfer rate to the downlink transfer rate.

However, the relation between the position represented by the first record and the position represented by the second record corresponds to the relation between the second base station apparatus 213b and the second base station apparatus 213a, which are illustrated in FIG. 4. The distance between the position represented by the first record and the position represented by the second record is about 145 m.

Moreover, the relation between the position represented by the third record and the position represented by the fourth record corresponds to the second base station apparatus 213d and the second base station apparatus 213c, which are illustrated in FIG. 5. The distance between the position represented by the third record and the position represented by the fourth record is about 253 m.

Moreover, the position represented by the fifth record is equal to the position represented by the sixth record. In other words, both of the position represented by the fifth record and the position represented by the sixth record correspond to the position of the second base station apparatus 213e illustrated in FIG. 6.

The transmitter 1007 transmits the response message. The response message includes data to search for the second base station apparatuses 213.

The receiver 1001, the identifying unit 1003, the database 1005 and the transmitter 1007 are realized by a combination of the hardware resources as described later and programs for the processing.

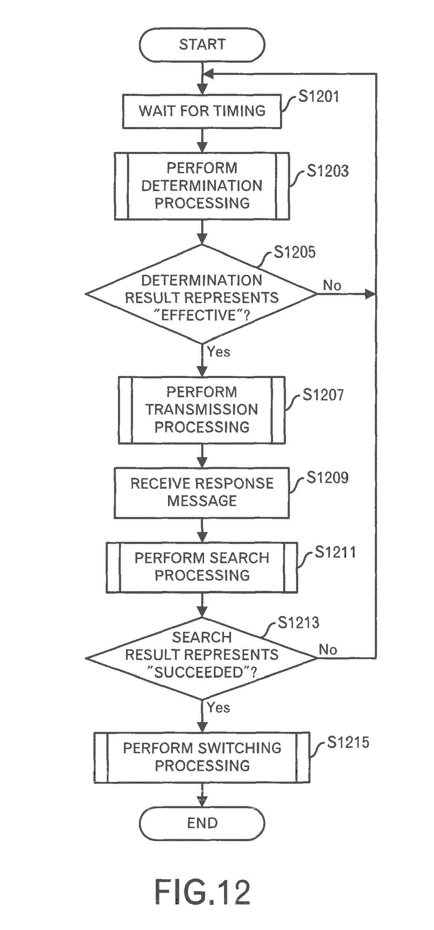

Next, the entire processing of the portable terminal apparatus 101 will be explained by using FIG. 12. The determination unit 907 waits for the timing for the determination processing (S1201). For example, the determination processing is repeated at predetermined intervals.

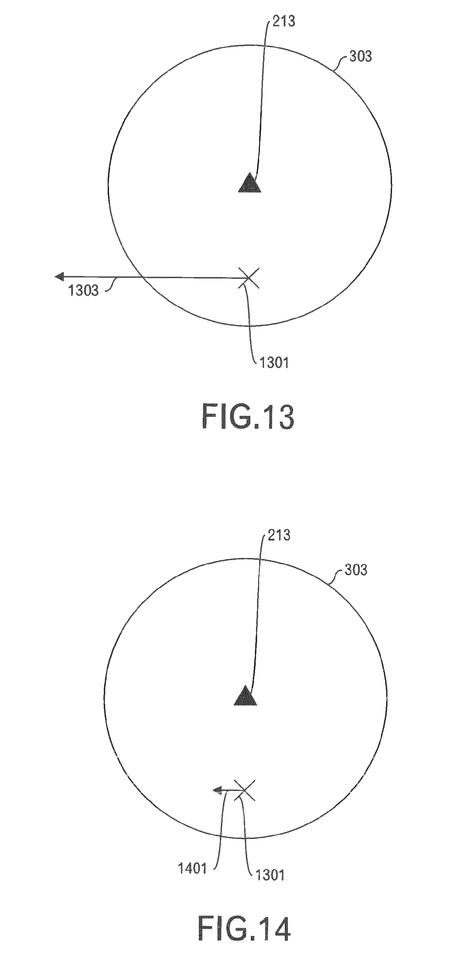

At the timing of the determination processing, the determination unit 907 performs the determination processing (S1203). In the following, an outline of the determination processing will be explained by using FIGs. 13 to 18. Firstly, the relation between the moving state of the portable terminal apparatus itself and the effectiveness of the switching of the connection will be explained by using FIG. 13 and FIG. 14.

A case is assumed that the portable terminal apparatus 101 in the small cell 303 moves at high speed. FIG. 13 illustrates a moving vector 1303 in case where the portable terminal apparatus 101 is moving at high speed at the position 1301 included in the small cell 303 in which the radio wave transmitted by the second base station apparatus 213 reaches. At that time, the user is moving while riding in the car or taking the train. In such a case, the possibility is high that the portable terminal apparatus 101 goes out of the small cell 303 soon.

When the portable terminal apparatus goes out of the area of the small cell 303, the portable terminal apparatus 101 changes the connection to the connection with another second base station apparatus 213 or to the connection with the first base station apparatus 203. As illustrated in FIG. 4, when the small cells 303 overlaps with each other, the portable terminal apparatus 101 changes the connection to the connection with another second base station apparatus 213. In case where the portable terminal apparatus 101 goes from the position 401 to the position 403, the portable terminal apparatus 101 changes the connection with the second base station apparatus 213a to the connection with second base station apparatus 213b at the position 405. In such a case, the connection with the second wireless communication system 211 continues.

On the other hand, as illustrated in FIG. 5, when the small cells 303 do not overlap with each other, the portable terminal apparatus 101 changes the connection to the connection with the first base station apparatus 203. When the portable terminal apparatus 101 goes from the position 501 to the position 503, the portable terminal apparatus 101 changes the connection with the second base station apparatus 213c to the connection with the first base station apparatus 203 at the position 505, for example. In such a case, the connection with the second wireless communication system 211 does not continue, and the portable terminal apparatus 101 returns to the connection with the first wireless communication system 201.

Therefore, under the environment where the small cells 303 sparsely exist, even when the connection of the portable terminal apparatus 101 that moves at high speed is switched to the connection with the second wireless communication system 211, the contribution to the reduction of the communication traffic in the first wireless communication system 201 is small.

Next, a case is assumed that the portable terminal apparatus 101 moves at slow speed in the small cell 303. FIG. 14 illustrates a moving vector 1401 in case where the portable terminal apparatus 101 moves at slow speed at the position 1301 included in the small cell 303 in which the radio wave transmitted by the second base station apparatus 213 reaches. At that time, the user is moving, for example, by walking. In such a case, the possibility is low that the portable terminal apparatus 101 goes out of the area of the small cell 303 soon.

In such a case, because the connection with the second base station apparatus 213 continues, the contribution to the reduction of the communication traffic in the first wireless communication system 201 is large.

Thus, in the determination processing, by using, as one condition, the moving state of the portable terminal apparatus 101 itself, it is determined whether or not the switching from the connection with the first wireless communication system 201 to the connection with the second wireless communication system 211 is effective.

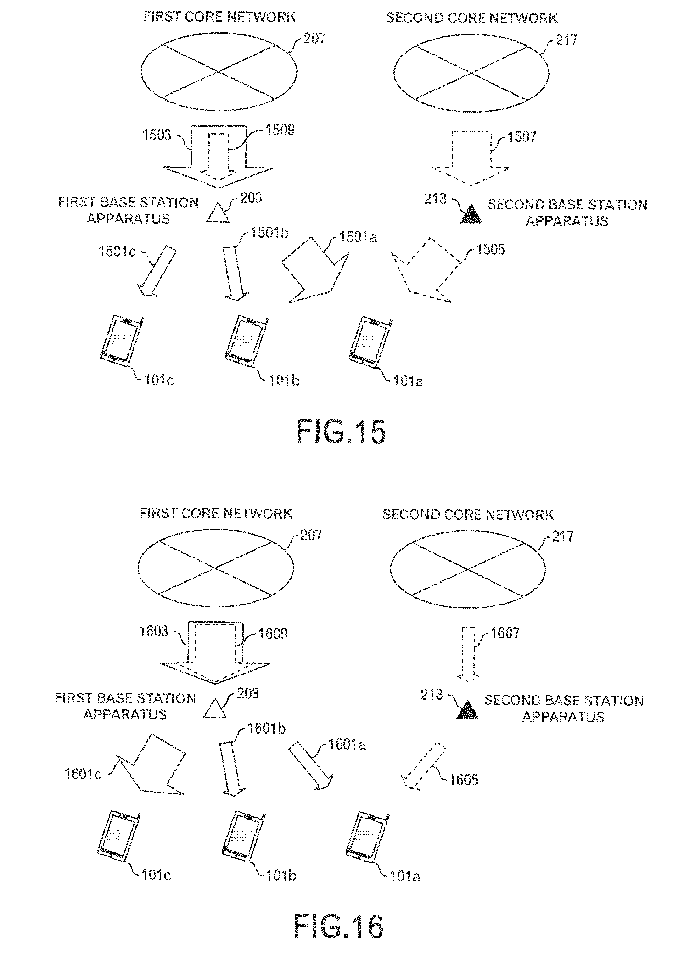

Next, the relation between the communication state of the portable terminal apparatus 101 and the effectiveness of the connection switching will be explained by using FIGs. 15 to 18.

Firstly, a case will be explained by using FIG. 15 that an amount of communication traffic of the downlink, which corresponds to the receiving in the portable terminal apparatus 101 that performs the connection switching, is large.

A case will be assumed that the portable terminal apparatus 101a changes the connection with the first base station apparatus 203 to the connection with the second base station apparatus 213 in the small cell 303. The portable terminal apparatuses 101b and 101c continue the connection with the first base station apparatus 203 before and after switching the connection in the portable terminal apparatus 101a. However, the portable terminal apparatuses 101b and 101c may not be multimode-compatible.

Before the portable terminal apparatus 101a switches the connection, any of the portable terminal apparatuses 101a to 101c connects with the first base station apparatus 203. An arrow 1501a schematically represents an amount of communication traffic relating to the downlink data that is transmitted to the portable terminal apparatus 101a from the first base station apparatus 203. An arrow 1501b schematically represents an amount of communication traffic relating to the downlink data that is transmitted to the portable terminal apparatus 101b from the first base station apparatus 203. An arrow 1501c schematically represents an amount of communication traffic relating to the downlink data that is transmitted to the portable terminal apparatus 101c from the first base station apparatus 203.

When the portable terminal apparatus 101a uses the streaming video, an amount of communication traffic is large as illustrated by the arrow 1501a. On the other hand when the portable terminal apparatuses 101b and 101c browse the static image, an amount of communication traffic is small as illustrated by the arrows 150b and 1501c.

The arrow 1503 schematically illustrates an amount of communication traffic of the downlink data that is transmitted from the first core network 207 to the first base station apparatus 203. The communication band from the first core network 207 to the first base station apparatus 203 is shared in the communication for the portable terminal apparatuses 101a to 101c. Therefore, the amount of communication traffic, which is illustrated by the arrow 1503, corresponds to the total of the amounts of communication traffic, which are illustrated by the arrows 1501a to 1501c. Then, when the amount of communication traffic, which is illustrated by the arrow 1503, exceeds a tolerable range, any trouble occurs in the communication of the portable terminal apparatuses 101a to 101c.

In such a state, when the portable terminal apparatus 101a changes the connection with the first base station apparatus 203 to the connection with the second base station apparatus 213, the portable terminal apparatus 101a receives the downlink data from the second base station apparatus 213. An arrow 1505 schematically represents an amount of communication traffic relating to the downlink data that is transmitted from the second base station apparatus 213 to the portable terminal apparatus 101a. The amount of communication traffic illustrated by the arrow 1505 corresponds to the amount of communication traffic illustrated by the arrow 1501a.

Moreover, when switching of the connection is made, the downlink data is transmitted from the second core network 217 to the secondbase station apparatus 213. An arrow 1507 schematically represents an amount of communication traffic transmitted from the second core network 217 to the second base station apparatus 213. The amount of communication traffic illustratedbythe arrow 1507 corresponds to the amount of communication traffic illustrated by the arrow 1505.

On the other hand, when the portable terminal apparatus 101a changes the connection with the first base station apparatus 203 to the connection with the second base station apparatus 213, the portable terminal apparatus 101a does not receive the downlink data from the first base station apparatus 203. In other words, the amount of communication traffic illustrated by the arrow 1501a becomes zero.

An arrow 1509 represents an amount of communication traffic of the downlink data that is transmitted from the first core network 207 to the first base station apparatus 203 after the switching of the connection. As illustrated in figure, the amount of communication traffic of the downlink data that is transmitted from the first core network 207 to the first base station apparatus 203 is reduced by the amount of communication traffic illustrated by the arrow 1501a, when compared with the amount of communication traffic illustrated by the arrow 1503.

Thus, because the communication traffic load is reduced in the first wireless communication system 201, the communication state is improved not only in the portable terminal apparatus 101a that performs the switching of the connection but also in the portable terminal apparatuses 101b and 101c.

Therefore, when the amount of communication traffic of the downlink data that is received by the portable terminal apparatus 101 that performs the switching of the connection is large, the switching of the connection is effective.

A case will be explained by using FIG. 16 that an amount of communication traffic of the downlink data that is received by the portable terminal apparatus 101 that performs the switching of the connection is small.

Similarly to FIG. 15, it is assumed that the portable terminal apparatus 101a changes the connection with the first base station apparatus 203 to the connection with the second base station apparatus 213 in the small cell 303. Moreover, the portable terminal apparatuses 101b and 101c continue the connection with the first base station apparatus 203 before and after the portable terminal apparatus 101a switches the connection. Similarly to FIG. 15, the portable terminal apparatuses 101b and 101c may not be multimode-compatible.

Similarly to FIG. 15, before the portable terminal apparatus 101a switches the connection, any of the portable terminal apparatuses 101a to 101c connects with the first base station apparatus 203. An arrow 1601a schematically represents an amount of communication traffic relating to the downlink data that is transmitted from the first base station apparatus 203 to the portable terminal apparatus 101a. An arrow 1601b schematically represents an amount of communication traffic relating to the downlink data that is transmitted from the first base station apparatus 203 to the portable terminal apparatus 101b. An arrow 1601c schematically represents an amount of communication traffic relating to the downlink data that is transmitted from the first base station apparatus 203 to the portable terminal apparatus 101c.

For example, when the portable terminal apparatuses 101a and 101b browse the static image, an amount of communication traffic is small as illustrated by the arrows 1601a and 1601b. On the other hand, for example, when the portable terminal apparatus 101c uses the streaming video, an amount of communication traffic is large as illustrated by the arrow 1601c.

An arrow 1603 schematically represents an amount of communication traffic of the downlink data that is transmitted from the first core network 207 to the first base station apparatus 203. The communication band from the first core network 207 to the first base station apparatus 203 is shared by the communication for the portable terminal apparatuses 101a to 101c. Therefore, the amount of communication traffic illustrated by the arrow 1603 corresponds to the total of the amounts of communication traffic, which are illustrated by the arrows 1601a to 1601c. Then, when the amount of communication traffic illustrated by the arrow 1603 exceeds a tolerable range, any trouble occurs in the communication of the portable terminal apparatuses 101a to 101c.

In such a case, when the portable terminal apparatus 101a changes the connection with the first base station apparatus 203 to the connection with the second base station apparatus 213, the portable terminal apparatus 101a receives the downlink data from the second base station apparatus 213. An arrow 1605 schematically illustrates an amount of communication traffic relating to the downlink data that is transmitted from the second base station apparatus 213 to the portable terminal apparatus 101a. The amount of communication traffic illustrated by the arrow 1605 corresponds to the amount of communication traffic illustrated by the arrow 1601a.

Moreover, when the switching of the connection is made, the downlink data from the second core network 217 to the second base station apparatus 213 is transmitted. An arrow 1607 schematically illustrates an amount of communication traffic transmitted from the second core network 217 to the second base station apparatus 213. The amount of communication traffic illustrated by the arrow 1607 corresponds to the amount of communication traffic illustrated by the arrow 1605.

On the other hand, when the portable terminal apparatus 101a changes the connection with the first base station apparatus 203 to the connection with the second base station apparatus 213, the portable terminal apparatus 101a does not receive the downlink data from the first base station apparatus 203. In other words, the amount of communication traffic illustrated by the arrow 1601a becomes zero.

An arrow 1609 represents an amount of communication traffic of the downlink data that is transmitted from the first core network 207 to the first base station apparatus 203 after the switching of the connection. As illustrated in the figure, the amount of communication traffic of the downlink data that is transmitted from the first core network 207 to the first base station apparatus 203 is reduced by the amount of communication traffic illustrated by the arrow 1601a, when compared with the amount of communication traffic illustrated by the arrow 1603.

Similarly to FIG. 15, the communication traffic load is reduced in the first wireless communication system 201. However, the reduced amount of communication traffic is lesser compared with a case of FIG. 15. Therefore, the improvement of the communication state in the portable terminal apparatuses 101b and 101c is lesser.

Therefore, when the communication traffic amount of the downlink data that is received by the portable terminal apparatus 101 that performs the switching of the connection is small, the switching of the connection is not effective.

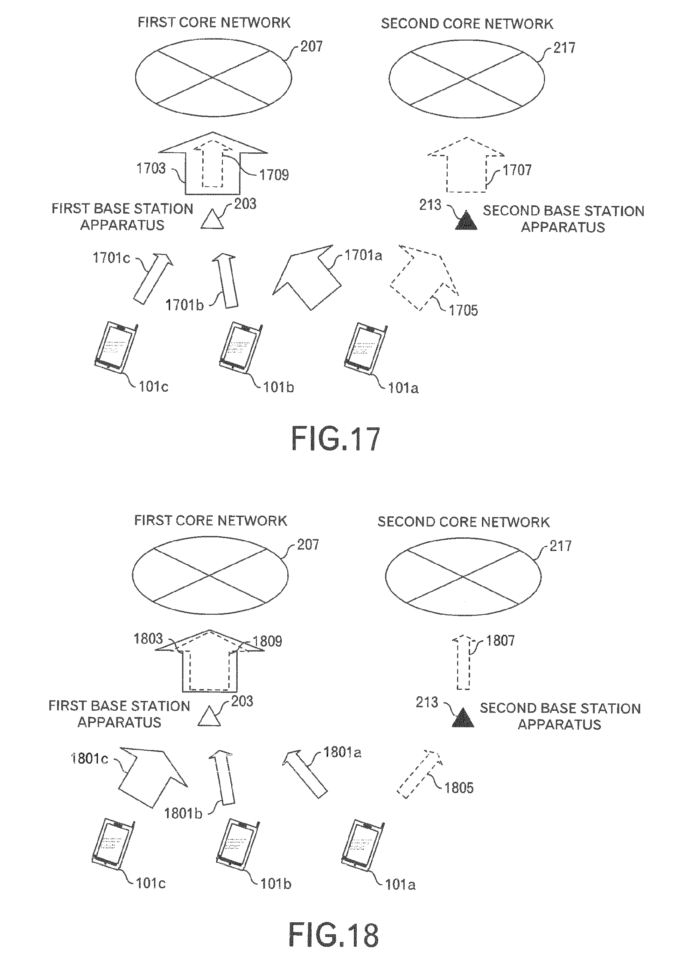

Next, a case will be explained by using FIG. 17 that an amount of communication traffic of the uplink data that is transmitted by the portable terminal apparatus 101 that performs the switching of the connection is large.

Similarly to FIGs. 15 and 16, it is assumed that the portable terminal apparatus 101a changes the connection with the first base station apparatus 203 to the connection with the second base station apparatus 213 in the small cell 303. Moreover, the portable terminal apparatuses 101b and 101c continue the connection with the first base station apparatus 203 before and after the portable terminal apparatus 101a switches the connection. Similarly to FIGs. 15 and 16, the portable terminal apparatuses 101b and 101c may not be multimode-compatible.

Similarly to FIGs. 15 and 16, before the portable terminal apparatus 101a switches the connection, the portable terminal apparatuses 101a to 101c connect with the first base station apparatus 203. An arrow 1701a schematically illustrates an amount of communication traffic relating to the uplink data that is transmitted from the portable terminal apparatus 101a to the first base station apparatus 203. An arrow 1701b schematically illustrates an amount of communication traffic relating to the uplink data that is transmitted from the portable terminal apparatus 101b to the first base station apparatus 203. An arrow 1701c schematically illustrates an amount of communication traffic relating to the uplink data that is transmitted from the portable terminal apparatus 101c to the first base station apparatus 203.

For example, when the portable terminal apparatus 101a uses the TV phone, the amount of communication traffic is large as illustrated by the arrow 1701a. On the other hand, when the portable terminal apparatuses 101b and 101c use, for example, the normal voice phone, the amount of communication traffic is small as illustrated by the arrows 1701b and 1701c.

An arrow 1703 schematically illustrates an amount of communication traffic of the uplink data that is transmitted from the first base station apparatus 203 to the first core network 207. The communication band from the first base station apparatus 203 to the first core network 207 is shared by the communication by the portable terminal apparatuses 101a to 101c. Therefore, the amount of communication traffic illustrated by the arrow 1703 corresponds to the total of the amounts of communication traffic, which are illustrated by the arrows 1701a to 1701c. Then, when the amount of communication traffic illustrated by the arrow 1703 exceeds a tolerable range, any trouble occurs in the communication of the portable terminal apparatuses 101a to 101c.

In such a case, when the portable terminal apparatus 101a changes the connection with the first base station apparatus 203 to the connection with the second base station apparatus 213, the portable terminal apparatus 101a transmits the uplink data to the second base station apparatus 213. An arrow 1705 schematically illustrates an amount of communication relating to the uplink data transmitted from the portable terminal apparatus 101a to the second base station apparatus 213. The amount of communication traffic illustrated by the arrow 1705 corresponds to the amount of communication traffic illustrated by the arrow 1701a.

Moreover, when the switching of the connection is made, the uplink data is transmitted from the second base station apparatus 213 to the second core network 217. An arrow 1707 schematically illustrates an amount of communication traffic transmitted from the second base station apparatus 213 to the second core network 217. The amount of communication traffic illustrated by the arrow 1707 corresponds to the amount of communication traffic illustrated by the arrow 1705.

On the other hand, when the portable terminal apparatus 101a changes the connection with the first base station apparatus 203 to the connection with the second base station apparatus 213, the portable terminal apparatus 101a does not transmit the uplink data to the first base station apparatus 203. In other words, the amount of communication traffic illustrated by the arrow 1701a becomes zero.

An arrow 1709 schematically illustrates an amount of communication traffic of the uplink data that is transmitted from the first base station apparatus 203 to the first core network 207 after the switching of the connection. As illustrated in the figure, the amount of communication traffic of the uplink data that is transmitted from the first base station apparatus 203 to the first core network 207 is reduced by the amount of communication traffic illustrated by the arrow 1701a, when compared with the amount of communication traffic illustrated by the arrow 1703.

Thus, because the communication traffic load in the first wireless communication system 201 is reduced, the communication state is improved not only in the portable terminal apparatus 101a that switches the connection but also the portable terminal apparatuses 101b and 101c.

Therefore, when the amount of communication traffic of the uplink data that is transmitted by the portable terminal apparatus 101 that switches the connection is large, the switching of the connection is effective.

Next, a case will be explained by using FIG. 18 that an amount of communication traffic of the uplink data that is transmitted by the portable terminal apparatus 101 that switches the connection is small.

Similarly to FIGs. 15 to 17, it is assumed that the portable terminal apparatus 101a changes the connection with the first base station apparatus 203 to the connection with the second base station apparatus 213 in the small cell 303. Moreover, the portable terminal apparatuses 101b and 101c continue the connection with the first base station apparatus 203 before and after the portable terminal apparatus 101a switches the connection. Similarly to FIGs. 15 to 17, the portable terminal apparatuses 101b and 101c may not be multimode-compatible.

Similarly to FIGs. 15 to 17, before the portable terminal apparatus 101a switches the connection, the portable terminal apparatuses 101a to 101c connect with the first base station apparatus 203. An arrow 1801a schematically illustrates an amount of communication traffic relating to the uplink data that is transmitted from the portable terminal apparatus 101a to the first base station apparatus 203. An arrow 1801b schematically illustrates an amount of communication traffic relating to the uplink data that is transmitted from the portable terminal apparatus 101b to the first base station apparatus 203. An arrow 1801c schematically illustrates an amount of communication traffic relating to the uplink data that is transmitted from the portable terminal apparatus 101c to the first base station apparatus 203.

For example, when the portable terminal apparatuses 101a and 101b use the normal voice phone, the amount of communication traffic is small as illustrated by the arrows 1801a and 1801b. On the other hand, when the portable terminal apparatus 101c uses, for example, the TV phone, the amount of communication traffic is large as illustrated by the arrow 1801c.

An arrow 1803 schematically depicts an amount of communication traffic of the uplink data that is transmitted from the first base station apparatus 203 to the first core network 207. The communication band from the first base station apparatus 203 to the first core network 207 is shared in the communication for the portable terminal apparatuses 101a to 101c. Therefore, the amount of communication traffic illustrated by the arrow 1803 corresponds to the total of the amounts of communication traffic, which are illustrated by the arrows 1801a to 1801c. Then, when the amount of communication traffic illustrated by the arrow 1803 exceeds a tolerable range, any trouble occurs in the communication for the portable terminal apparatuses 101a to 101c.

In such a case, when the portable terminal apparatus 101a changes the connection with the first base station apparatus 203 to the connection with the second base station apparatus 213, the portable terminal apparatus 101a transmits the uplink data to the second base station apparatus 213. An arrow 1805 schematically illustrates an amount of communication traffic relating to the uplink data that is transmitted from the portable terminal apparatus 101a to the second base station apparatus 213. The amount of communication traffic illustrated by the arrow 1805 corresponds to the amount of communication traffic illustrated by the arrow 1801a.

Moreover, when the switching of the connection is made, the uplink data is transmitted from the second base station apparatus 213 to the second core network 217. An arrow 1807 schematically illustrates an amount of communication traffic that is transmitted from the second base station apparatus 213 to the second core network 217. The amount of communication traffic illustrated by the arrow 1807 corresponds to the amount of communication traffic illustrated by the arrow 1805.

On the other hand, when the portable terminal apparatus 101a changes the connection with the first base station apparatus 203 to the connection with the second base station apparatus 213, the portable terminal apparatus 101a does not transmit the uplink data to the first base station apparatus 203. In other words, the amount of communication traffic illustrated by the arrow 1801a becomes zero.

An arrow 1809 schematically illustrates an amount of communication traffic of the uplink data that is transmitted from the firstbase station apparatus 203 to the first core network 207 after switching the connection. As illustrated in the figure, an amount of communication traffic of the uplink data that is transmitted from the first base station apparatus 203 to the first core network 207 is reduced by the amount of communication traffic illustrated by the arrow 1801a, when compared with the amount of communication traffic illustrated by the arrow 1803.

Similarly to FIG. 17, the communication traffic load in the first wireless communication system 201 is reduced. However, the reduced amount of communication traffic is lesser than that in a case of FIG. 17. Therefore, the improvement of the communication state in the portable terminal apparatuses 101b and 101c is small.

Therefore, when the amount of communication traffic of the uplink data that is transmitted from the portable terminal apparatus 101 that switches the connection is small, the switching of the connection is not effective.

Thus, in this determination processing, it is determined by using the communication state with the first base station apparatus 203 as one condition, whether or not the switching from the connection with the first wireless communication system 201 to the connection with the second wireless communication system 211 is effective.

In the following, the determination processing will be explained by using FIG. 19 in detail. The determination unit 907 causes the measurement unit 909 to measure the moving speed. The measurement unit 909 measures the moving speed of the portable terminal apparatus 101 itself by using the accelerometer 137 (S1901).

The determination unit 907 determines whether or not the measured moving speed exceeds a criterion speed (S1903). For example, when the measured moving speed is almost equal to the running speed of the car or train, it is determined that the measured moving speed exceeds the criterion speed. Moreover, for example, when the measured moving speed is almost equal to the walking speed, it is determined that the measured moving speed does not exceed the criterion speed.

When it is determined that the measured moving speed exceeds the criterion speed, the determination unit 907 determines that the switching to the second wireless communication system 211 is "not effective" (S1905), and stores data representing that the switching is not effective, and the determination processing ends. Then, the processing returns to the processing of S1205 in FIG.12.

For example, when the moving speed is large as illustrated in FIG. 13, it is determined that the switching to the second wireless communication system 211 is "not effective".

On the other hand, when it is determined that the measured moving speed does not exceed the criterion speed, the processing shifts to determination about the amount of communication traffic.

The determination unit 907 identifies an amount of communication traffic of the downlink data (S1907). The determination unit 907 obtains the amount of communication traffic of the downlink data from the communication unit 905, for example.

Or, when the application unit 901 sets the transfer rate of the downlink data to the setting unit 903 and the communication unit 905 receives data based on the transfer rate of the downlink data, which is set in the setting unit 903, the determination unit 907 may obtain the transfer rate of the downlink data from the setting unit 903. Then, the determination unit 907 may identify the amount of communication traffic of the downlink data based on the obtained transfer rate of the downlink data.

The determination unit 907 determines whether or not the amount of communication traffic of the downlink data exceeds a criterion amount (S1909). When it is determined that the amount of communication traffic of the downlink data exceeds the criterion amount, the determination unit 907 determines that the switching to the second wireless communication system 211 is "effective", and stores data representing that the switching is effective (S1911), and the determination processing ends. Then, the processing returns to the processing of S1205 in FIG. 12.

For example, as illustrated in FIG. 15, when the amount of communication traffic of the downlink data is large, it is determined that the switching to the second wireless communication system 211 is "effective".

When it is determined that the amount of communication traffic of the downlink data does not exceed the criterion amount, the determination unit 907 identifies an amount of communication traffic of the uplink data (S1913). The determination unit 907 obtains the amount of communication traffic of the uplink data from the communication unit 905, for example.

Or, when the application unit 901 sets the transfer rate of the uplink data to the setting unit 903 and the communication unit 905 transmits data based on the transfer rate of the uplink data, which is set in the setting unit 903, the determination unit 907 may obtain the transfer rate of the uplink data from the setting unit 903, and may identify the amount of communication traffic of the uplink data based on the obtained transfer rate of the uplink data.

The determination unit 907 determines whether or not the amount of communication traffic of the uplink data exceeds a criterion amount (S1915). When it is determined that the amount of communication traffic of the uplink data exceeds the criterion amount, the determination unit 907 determines that the switching to the second wireless communication system 211 is "effective", and stores data representing that the switching is effective (S1911). The determination processing ends. Then, the processing returns to the processing of S1205 in FIG. 12.

For example, as illustrated in FIG. 17, when the amount of communication traffic of the uplink data is large, it is determined that the switching to the second wireless communication system 211 is "effective".

When it is determined that the amount of communication traffic of the uplink data does not exceed the criterion amount, the determination unit 907 determines that the switching to the second wireless communication system 211 is "not effective" (S1917), and stores data representing that the switching isnoteffective. The determination processing ends. Then, the processing returns to the processing of S1205 in FIG. 12.

For example, when the amount of communication traffic of the downlink data is small as illustrated in FIG. 16, and furthermore the amount of communication traffic of the uplink data is small as illustrated in FIG. 18, it is determined that the switching to the second wireless communication system 211 is "not effective".

In this example, the determination is made based on a combination of the condition of the moving speed and the condition of the amount of communication traffic, however, the determination may be made by a single condition of the moving speed without using the condition of the amount of communication traffic. Moreover, the determination may be made by a single condition of the amount of communication traffic without using the condition of the moving speed.

The moving speed is a mere example of a movement state of the portable terminal apparatus itself. For example, the determination may be made based on a condition of the moving acceleration. Or, the determination may be made based on a condition of the moving direction.

The amount of communication traffic is a mere example of the communication state. For example, the determination may be made based on a condition concerning the communication error. Or, the determination may be made based on a condition concerning the strength of the radio wave.

Returning to the explanation of FIG. 12, the processing branches based on whether or not the determination result by the determination processing executed by S1203 is "effective" (S1205).

When the determination result by the determination processing executed by S1203 is "not effective", the processing returns to the processing of S1201.

When the determination result by the determination processing executed at S1203 is "effective", the transmitter 911 executes a transmission processing (S1207), In the transmission processing, a message to inquire the second base station apparatuses 213 to be searched for is transmitted to the first base station apparatus 203.

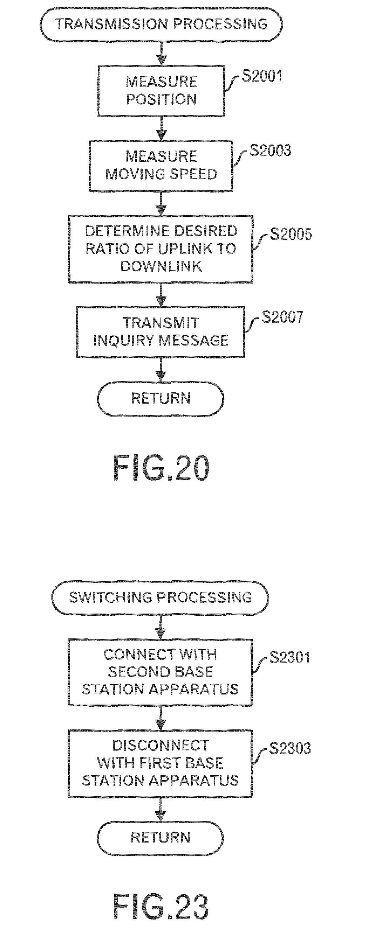

Next, the transmission processing will be explained in detail by using FIG. 20. The transmitter 911 causes the measurement unit 909 to measure the position of the portable terminal apparatus 101. The measurement unit 909 measures the position of the portable terminal apparatus 101 by using the GPS sensor 139 (S2001).

The transmitter 911 causes the measurement unit 909 to measure the moving speed. The measurement unit 909 measures the moving speed of the portable terminal apparatus 101 by using the accelerometer 137 (S2003). However, when the inquiry message does not include the moving speed data, the processing of S2003 may be omitted.

The transmitter 911 determines a desired ratio of the uplink to the downlink (S2005). For example, based on the transfer rate set in the setting unit 903, the desired ratio of the uplink to the downlink is determined. When the inquiry message does not include the desired ratio of the uplink to the downlink, the processing of S2005 may be omitted.

The transmitter 911 transmits an inquirymessage including the position data, the moving speed data and the desired ratio of the uplink to the downlink (S2007). The transmitter 911 may not include the moving speed data in the inquiry message. Moreover, the transmitter 911 may not include the desired ratio of the uplink to the downlink in the inquirymessage. When the transmissionprocessing ends, the processing returns to the processing of S1209 illustrated in FIG. 12.

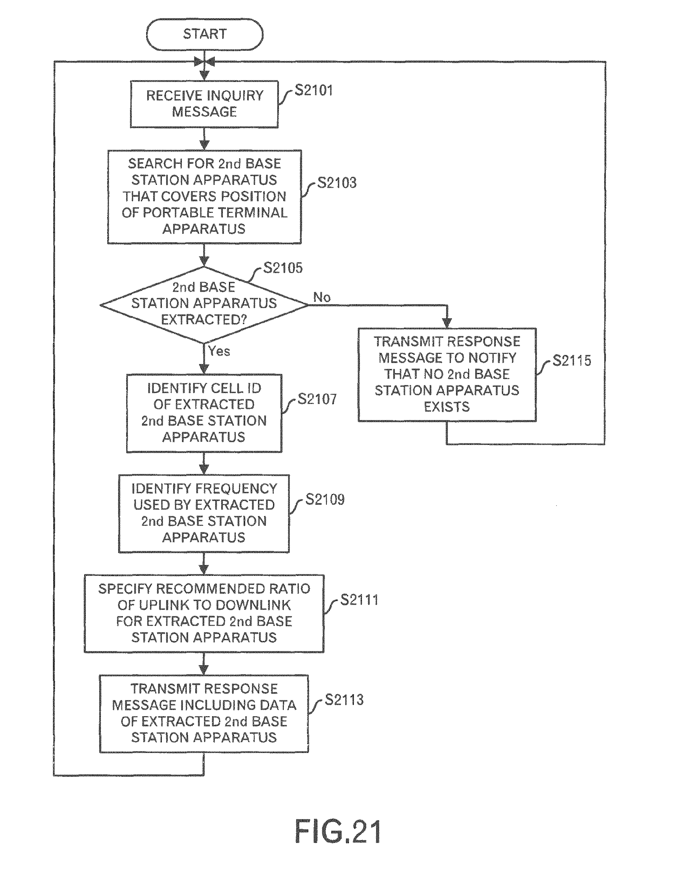

Before the explanation for the processing of S1209 illustrated in FIG. 12, a processing of the first base station apparatus 203 side will be explained. FIG. 21 illustrates an entire processing flow in the first base station apparatus 203. When the receiver 1001 receives the inquirymessage (S2101), the identifying unit 1003 searches the database 1005 for the second base station apparatus 213 that covers the position of the portable terminal apparatus 101 based on the position data included in the inquiry message (S2103). When the position of the second base station apparatus 213 is set in the database 1005, the identifying unit 1003 searches for the second base station apparatus 213 whose distance with the position of the portable terminal apparatus 101 is equal to or less than the radius of the small cell. When the area of the small cell 303 is set in the database 1005, the identifying unit 1003 searches for the area including the position of the portable terminal apparatus 101.

The identifying unit 1003 determines whether or not there is a second base station apparatus 213 that covers the position of the portable terminal apparatus 101 (S2105). When it is determined that there is a second base station apparatus 213 that covers the position of the portable terminal apparatus 101, the identifying unit 1003 identifies the cell ID of the pertinent second base station apparatus 213 from the record concerning the pertinent second base station apparatus 213 that covers the position of the portable terminal apparatus 101 (S2107).

Furthermore, the identifying unit 1003 identifies the frequency that the pertinent second base station apparatus 213 uses from the record concerning the pertinent second base station apparatus 213 that covers the position of the portable terminal apparatus 101 (S2109).

Moreover, the identifying unit 1003 identifies the recommended ratio of the uplink to the downlink for the second base station apparatus 213 that covers the position of the portable terminal apparatus 101 (S2111). For example, when the inquiry message includes the desired ratio of the uplink to the downlink, the identifying unit 1003 identifies the recommended ratio of the uplink to the downlink based on the desired ratio of the uplink to the downlink. When the record concerning the second base station apparatus 213 that covers the position of the portable terminal apparatus 101 includes the ratio that is equal to the desired ratio of the uplink to the downlink, that ratio is used. When the record concerning the second base station apparatus 213 that covers the position of the portable terminal apparatus 101 does not include the ratio that is equal to the desired ratio of the uplink to the downlink, the ratio that is near the desired ratio of the uplink to the downlink is used.

The identifying unit 1003 may identify the recommended ratio of the uplink to the downlink by its own determination regardless of the desired ratio of the uplink to the downlink.

When the response message does not include the recommended ratio of the uplink to the downlink, the processing of S2111 may be omitted.

The identifying unit 1003 transmits the response message including the data of the second base station apparatus that covers the position of the portable terminal apparatus (S2113). The data of the secondbase station apparatus includes the cell ID, the frequency and the recommended ratio of the uplink to the downlink. However, the data of the second base station apparatus may not include the recommended ratio of the uplink to the downlink. When the response message is transmitted, the processing returns to the processing of S2101.

When it is determined at S2105 that there is no second base station apparatus 213 that covers the position of the portable terminal apparatus 101, the transmitter 1007 transmits a response message to notify that there is no second base station apparatus 213 (S2115). When the response message is transmitted, the processing returns to the processing of S2101.

The identifying unit 1003 may determine based on the moving speed data included in the inquiry message, whether or not the moving speed of the portable terminal apparatus 101 exceeds the criterion. Then, when it is determined that the moving speed of the portable terminal apparatus 101 exceeds the criterion, the identifying unit 1003 may determine at S2105 that there is no second base station apparatus 213 that covers the position of the portable terminal apparatus 101.

Returning to the explanation for the processing on the portable terminal apparatus 101 side, which is illustrated in FIG. 12, when the receiver 913 receives the response message from the first base station apparatus 203 (S1209), the search unit 915 performs the search processing (S1211).

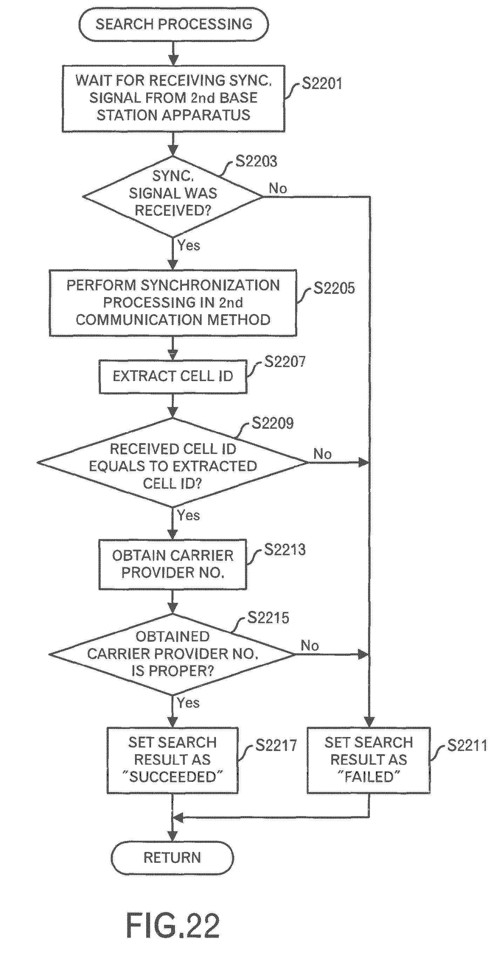

The search processing will be explained by using FIG. 22. The search unit 915 waits for reception of a synchronous signal from the second base station apparatus 213 according to the frequency included in the response message (S2201).

When the response message to notify that there is no second base station apparatus 213, the search processing may not be performed.

The search unit 915 determines whether or not the synchronous signal was received (S2203). When it is determined that the synchronous signal is not received, the search unit 915 sets "failed" as the search result (S2211).

When it is determined that the synchronous signal was received, the search unit 915 performs a synchronous processing in the second wireless communication method according to the synchronous signal (S2205). When the frame synchronization is established, the search unit 915 extracts the cell ID from the synchronous signal (S2207). Then, the search unit 915 determines whether or not the extracted cell ID is equal to the cell ID included in the response message (S2209).

When it is determined that the extracted cell ID is not equal to the cell ID included in the response message, the search unit 915 sets "failed" as the search result (S2211).

When it is determined that the extracted cell ID is equal to the cell ID included in the response message, the search unit 915 further receives a control message from the second base station apparatus 213, demodulates the received control message, and obtains a carrier provider number (S2213).

The search unit 915 determines whether or not the obtained carrier provider number is proper (S2215). In other words, when the carrier provider number represents the carrier provider that operates the second wireless communication system 211, it is determined that the carrier provider number is proper. When the carrier provider number does not represent the carrier provider that operates the second wireless communication system 211, it is determined that the carrier provider number is not proper.

When it is determined that the obtained carrier provider number is proper, the search unit 915 sets "succeeded" as the search result (S2217).

When it is determined that the obtained carrier provider number is not proper, the search unit 915 sets "failed" as the search result (S2211). When the search processing ends, the processing returns to S1213 in FIG. 12.

Returning to the explanation of FIG. 12, the switching unit 917 determines whether or not the search result represents "succeeded" (31213). When it is determined that the search result does not represent "succeeded", in other words, when it is determined that the search result represents "failed", the processing returns to the processing of S1201.

On the other hand, when it is determined that the search result represents "succeeded", the switching unit 917 performs the switching processing (S1215).

The switching processing will be explained by using FIG. 23 in detail. The switching unit 917 connects with the second base station apparatus 213 after the search processing (S2301). When the connection with the second base station apparatus 213 is made, the switching unit 917 disconnects the connection with the first base station apparatus 203 (S2303).

When the switching processing ends as illustrated in FIG. 12, the entire processing in the portable terminal apparatus 101 ends.

According to this embodiment, in a state that the switching from the connection with the first wireless communication system 201 to the connection with the second wireless communication system 211 is not effective, the search of the second base station apparatus 213 is omitted, and it is possible to suppress the consumed power of the portable terminal apparatus 101. Furthermore, it is possible to suppress the power consumption relating to the transmission of the message to the first base station apparatus 203.

Furthermore, when the possibility is high that the portable terminal apparatus 101 goes out of the area of the small cell 303 made by the second base station apparatus 213 because the portable terminal apparatus 101 moves at high speed, it is possible to omit the search of the second base station apparatus 213 and suppress the power consumption of the portable terminal apparatus 101. Furthermore, it is possible to suppress the power consumption relating to the transmission to the first base station apparatus 203.

Furthermore, when the contribution to the reduction of the load relating to the transfer of the downlink data in the first wireless communication system 201 is small, it is possible to omit the search for the second base station apparatus 213, and suppress the power consumption of the portable terminal apparatus 101. Moreover, it is possible to suppress the power consumption caused by the transmission of the message to the first base station apparatus 203.

Furthermore, when the contribution to the reduction of the load relating to the transfer of the uplink data in the first wireless communication system 201 is small, it is possible to omit the search for the second base station apparatus 213, and suppress the power consumption of the portable terminal apparatus 101. Moreover, it is possible to suppress the power consumption caused by the transmission of the message to the first base station apparatus 203.

### [Embodiment 2]

In the aforementioned embodiment, when there is no second base station apparatus 213 that covers the position of the portable terminal apparatus 101, the response message to notify the portable terminal apparatus 101 that there is no secondbase station apparatus 213 is transmitted. However, in this embodiment, an example will be explained that the response message including data of the adjacent second base station apparatus 213 is transmitted, when there is no secondbase station apparatus 213 that covers the position of the portable terminal apparatus 101.

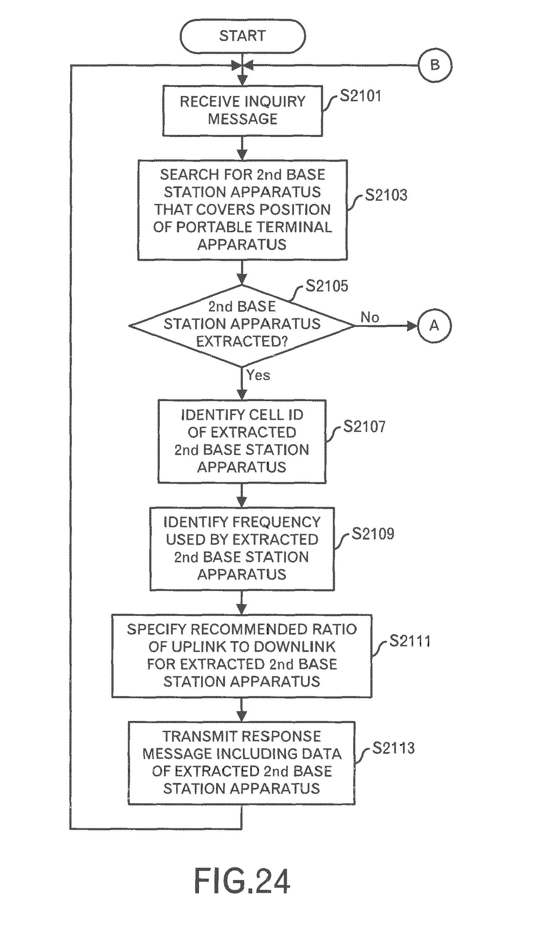

First, the entire processing in the first base station apparatus 203 relating to the second embodiment will be explained by using FIG. 24. Similarly to FIG. 21, when the receiver 1001 receives the inquiry message (S2101), the identifying unit 1003 searches the database 1005 for the second base station apparatus 213 that covers the position of the portable terminal apparatus 101 based on the position data included in the inquiry message (S2103).

Furthermore, the identifying unit 1003 determines whether or not there is a second base station apparatus 213 that covers the position of the portable terminal apparatus 101 (S2105). The processing (S2107 to S2113) when it is determined that there is the second base station apparatus 213 that covers the position of the portable terminal apparatus 101 is the same as that in FIG. 21.

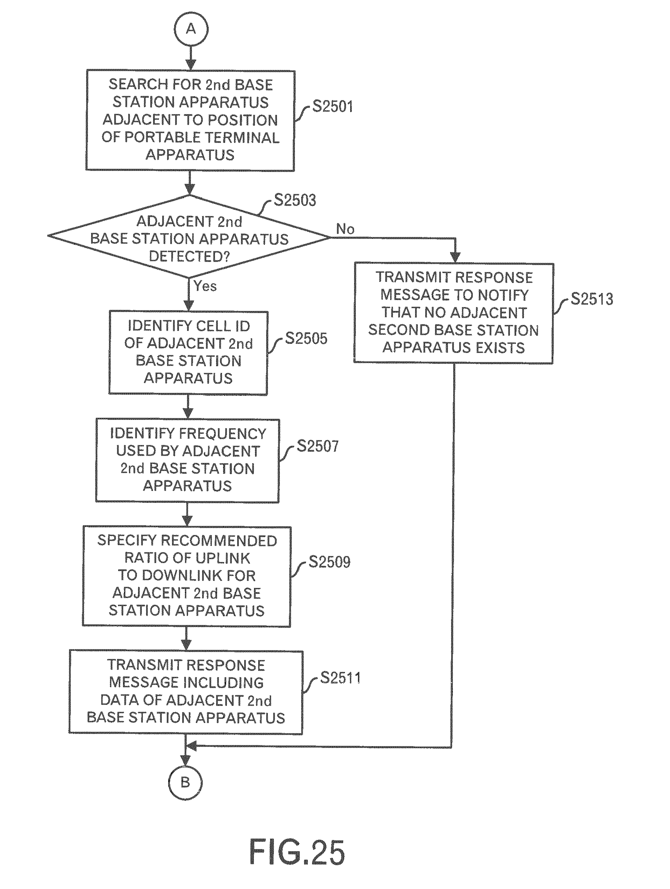

When it is determined that there is no second base station apparatus 213 that covers the position of the portable terminal apparatus 101, the processing shifts to the processing in FIG. 25 through terminal A.

Shifting to the explanation of FIG. 25, the identifying unit 1003 searches for the secondbase station apparatus 213 that is adj acent to the position of the portable terminal apparatus 101 (S2501). When the position of the second base station apparatus 213 is set in the database 1005, the identifying unit 1003 searches for the second base station apparatus 213 whose distance from its position to the position of the portable terminal apparatus 101 is equal to or less than a predetermined value (e.g. the double of the radius of the small cell), for example. When the area of the small cell 303 is set in the database 1005, the identifying unit 1003 searches for the second base station apparatus 213 whose distance from the boundary of the area to the position of the portable terminal apparatus 101 is equal to or less than a predetermined value (e.g. the radius of the small cell).

The identifying unit 1003 determines whether or not there is an adjacent second base station apparatus 213 (S2503). When it is determined that there is the adjacent second base station apparatus 213, the identifying unit 1003 identifies the cell ID of the adjacent second base station apparatus 213 from the record for the adjacent second base station apparatus 213 (S2505).

Furthermore, the identifying unit 1003 identifies the frequency of the adjacent second base station apparatus 213 from the record concerning the adjacent second base station apparatus 213 (S2507).

The identifying unit 1003 identifies the recommended ratio of the uplink to the downlink for the adjacent second base station apparatus 213 (S2509). For example, when the inquiry message includes the desired ratio of the uplink to the downlink, the identifying unit 1003 identifies the recommended ratio of the uplink to the downlink based on the desired ratio of the uplink to the downlink. When the record concerning the adjacent second base station apparatus 213 includes the ratio that is equal to the desired ratio of the uplink to the downlink, that ratio is used. When the record concerning the adjacent second base station apparatus 213 does not include the ratio that is equal to the desired ratio of the uplink to the downlink, the ratio that is near the desired ratio of the uplink to the downlink is used.

Similarly to the case of the second base station apparatus 213 that covers the position of the portable terminal apparatus 101, the identifying unit 1003 may identify the recommended ratio of the uplink to the downlink by its own determination regardless of the desired ratio of the uplink to the downlink.

When the response message does not include the recommended ratio of the uplink to the downlink, the processing of S2509 may be omitted.

The transmitter 1007 transmits the response message including data of the adjacent second base station apparatus (S2511). Similarly to the case of the second base station apparatus 213 that covers the position of the portable terminal apparatus 101, the data of the second base station apparatus includes the cell ID, frequency and recommended ratio of the uplink to the downlink. Furthermore, the response message may include data representing whether or not the second base station apparatus 213 is adjacent. However, the data of the second base station apparatus may not include the recommended ratio of the uplink to the downlink. When the response message is transmitted, the processing returns to the processing of S2101 in FIG. 24 through terminal B.

When it is determined at S2503 that there is no adjacent second base station apparatus 213, the transmitter 1007 transmits the response message to notify the portable terminal apparatus 101 that there is no adjacent second base station apparatus 213 (S2513). When the response message is transmitted, the processing returns to the processing of S2101 in FIG. 24 through the terminal B.

The processing of S2107 to S2113 in FIG. 24 is similar to those in FIG. 21.

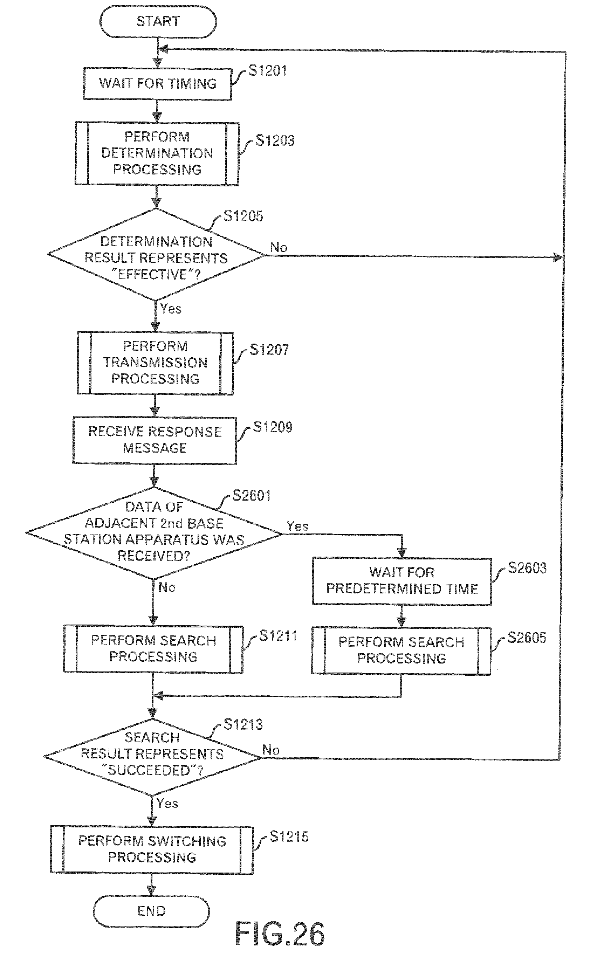

Next, the entire processing in the portable terminal apparatus 101 relating to the second embodiment will be explained by using FIG. 26. The processing of S1201 to S1209 is similar to those in FIG. 12.

When the response message was received at S1209, the search unit 915 determines whether or not the response message includes data of the adjacent base station apparatus (S2601). When it is determined that the response message does not include the data of the adjacent second base station apparatus, the processing of S1211 to S1215 is performed similarly to FIG. 12.

When it is determined that the response massage includes the data of the adjacent second base station apparatus, the search unit 915 waits for a predetermined time (S2603), and then performs the search processing (S2605). The waiting time may be changed every time. The search unit 915 may wait for a time longer than the predetermined time. The search processing at S2605 is the same as that explained by FIG. 22.

According to this embodiment, when the portable terminal apparatus 101 moves from a place where the portable terminal apparatus 101 is not included in any small cells 303 to a place within the adjacent small cell 303, the second base station apparatus 213 can be detected without performing the determination processing of whether or not the switching of the connection is effective. Therefore, it is possible to suppress the power consumption relating to the determination processing in the portable terminal apparatus 101.

### [Embodiment 3]

In this embodiment, an example will be explained that, when there are plural small cells 303 that cover the position of the portable terminal apparatus 101, which is identified by the inquiry message, any one of the second base station apparatuses 213 is selected based on degrees representing how much the second base station apparatus 213 corresponding to the small cell 303 is used.

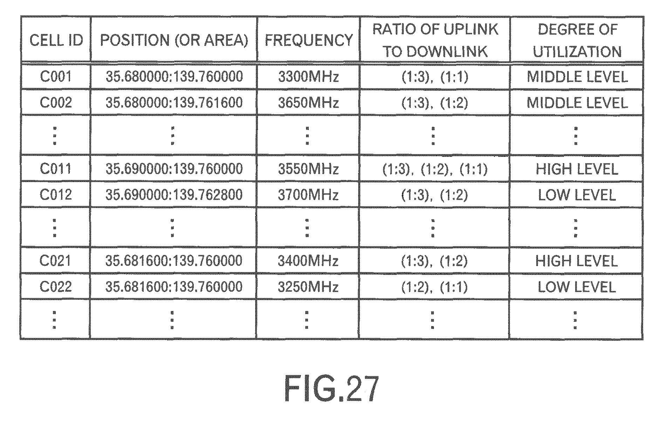

Firstly, a configuration of the database 1005 relating to the third embodiment will be explained by using FIG. 27. The database 1005 has a record corresponding to each second base station apparatus 213, similarly to the example in FIG. 11. Each record in the database 1005 includes fields of the cell ID, position (or area), frequency, ratio of the uplink to the downlink, and degree of utilization.

The fields of the cell ID, position (or area), frequency and ratio of the uplink to the downlink are the same as those in FIG. 11. The field of the degree of utilization stores degree representing how much this second base station apparatus 213 is utilized. The degree of utilization is set based on the number of portable terminal apparatuses 101 being connected to the second base station apparatus 213, for example. Or, the degree of utilization may be set based on an amount of communication traffic with the portable terminal apparatuses 101 being connected with the second base station apparatus 213, for example. In this example, the level corresponding to the degree of utilization is used, however a numerical value representing the degree of utilization may be used.

The first record in FIG. 27 represents that the latitude and longitude that represent the position of the second base station apparatus 213 identified by the cell ID "C001" are "35.680000" and "139.760000", similarly to the example of FIG. 11. Moreover, the first record represents that the second base station apparatus 213 uses the frequency "3300 MHz" and is compatible for the ratio "1:3" of the uplink transfer rate to the downlink transfer rate and the ratio "1:1" of the uplink transfer rate to the downlink transfer rate, similarly to the example of FIG. 11.

The first record in FIG. 27 further represents the degree of utilization of this second base station apparatus 213 is "middle level".

The second record in FIG. 27 represents that the latitude and longitude that represent the position of the second base station apparatus 213 identified by the cell ID "C002" are "35.680000" and "139.761600", similarly to the example of FIG. 11. Moreover, the second record represents that the second base station apparatus 213 uses the frequency "3650 MHz" and is compatible for the ratio "1:3" of the uplink transfer rate to the downlink transfer rate and the ratio "1:2" of the uplink transfer rate to the downlink transfer rate, similarly to the example of FIG. 11.

The second record in FIG. 27 further represents the degree of utilization of this second base station apparatus 213 is "middle level".

The third record in FIG. 27 represents that the latitude and longitude that represent the position of the second base station apparatus 213 identified by the cell ID "C011" are "35.690000" and "139.760000", similarly to FIG. 11. Moreover, the third record represents that the second base station apparatus 213 uses the frequency "3550 MHz" and is compatible for the ratio "1:3" of the uplink transfer rate to the downlink transfer rate, the ratio "1:2" of the uplink transfer rate to the downlink transfer rate and the ratio "1:1" of the uplink transfer rate to the downlink transfer rate, similarly to FIG. 11.

The third record in FIG. 27 further represents that the degree of utilization of this second base station apparatus 213 is "high level".

The fourth record in FIG. 27 represents that the latitude and longitude that represent the position of the second base station apparatus 213 identified by the cell ID "C012" are "35.690000" and "139.762800", similarly to the example of FIG. 11. Moreover, the fourth record represents that the second base station apparatus 213 uses the frequency "3700 MHz" and is compatible for the ratio "1:3" of the uplink transfer rate to the downlink transfer rate and the ratio "1:2" of the uplink transfer rate to the downlink transfer rate, similarly to the example of FIG. 11.

The fourth record in FIG. 27 further represents that the degree of utilization of this second base station apparatus 213 is "low level".

The fifth record in FIG. 27 represents that the latitude and longitude that represent the position of the second base station apparatus 213 identified by the cell ID "C021" are "35.681600" and "139.760000", similarly to the example of FIG. 11. Moreover, the fifth record represents that the second base station apparatus 213 uses the frequency "3400 MHz" and is compatible for the ratio "1:3" of the uplink transfer rate to the downlink transfer rate and the ratio "1:2" of the uplink transfer rate to the downlink transfer rate, similarly to the example of FIG. 11.

The fifth record in FIG. 27 further represents that the degree of utilization of this second base station apparatus 213 is "high level".

The sixth record in FIG. 27 represents that the latitude and longitude that represent the position of the second base station apparatus 213 identified by the cell ID "C022" are "35.681600" and "139.760000", similarly to the example of FIG. 11. Moreover, the sixth record represents that the second base station apparatus 213 uses the frequency "3250 MHz" and is compatible for the ratio "1:2" of the uplink transfer rate to the downlink transfer rate and the ratio "1:1" of the uplink transfer rate to the downlink transfer rate, similarly to the example of FIG. 11.

The sixth record in FIG. 27 further represents the degree of utilization of this second base station apparatus 213 is "low level".

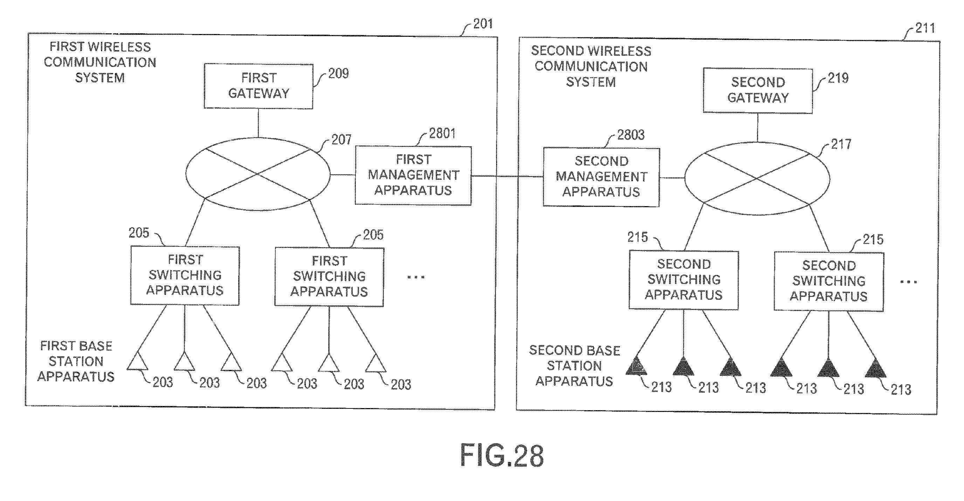

Next, two examples of the system configuration relating to this embodiment will be explained. FIG. 28 illustrates a configuration example of the first wireless communication system 201 that includes a first management apparatus 2801 and the second wireless communication system 211 that includes a second management apparatus 2803. The first management apparatus 2801 is connected with the first core network 207, and manages data concerning the first base station apparatuses 203.

On the other hand, the second management apparatus 2803 is connected with the second core network 217, and manages data concerning the second base station apparatus 213.

Moreover, the first management apparatus 2801 and the second management apparatus 2803 are connected. The second base station apparatus 213 notifies the first base station apparatus 203 of data concerning the second base station apparatus 213 through the second switching apparatus 215, the second management apparatus 2803, the first management apparatus 2801 and the first switching apparatus 205.

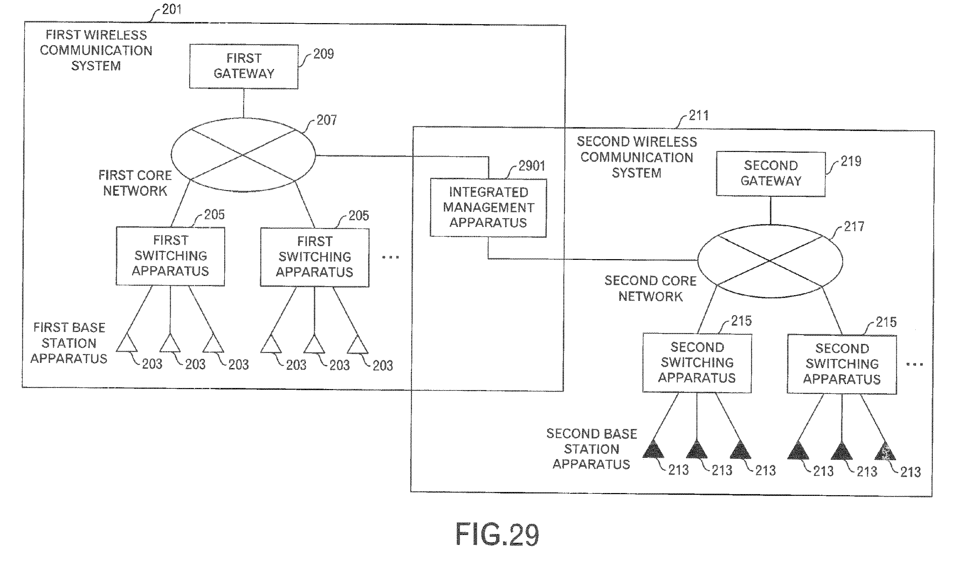

Next, another system configuration will be explained. FIG. 29 illustrates a configuration example of a communication system including an integrated management apparatus 2901. The integrated management apparatus 2901 is connected with the first core network 207, and manages data concerning the first base station apparatus 203. Moreover, the integrated management apparatus 2901 is connected with the second core network 217, and manages data concerning the second base station apparatus 213. In other words, the integrated management apparatus 2901 has functions of the aforementioned first management apparatus 2801 and the second management apparatus 2803. The integrated management apparatus 2901 is a part of the first wireless communication system 201 and is also a part of the second wireless communication system 211.

The second base station apparatus 213 notifies the first base station apparatus 203 of data concerning the second base station apparatus 213 through the second switching apparatus 215, the integrated management apparatus 2901 and the first switching apparatus 205.

Or, the second base station apparatus 213 may be connected with the first base station apparatus 203, and the second base station apparatus 213 may directly notify the first base station apparatus 203 of the data concerning the second base station apparatus 213.

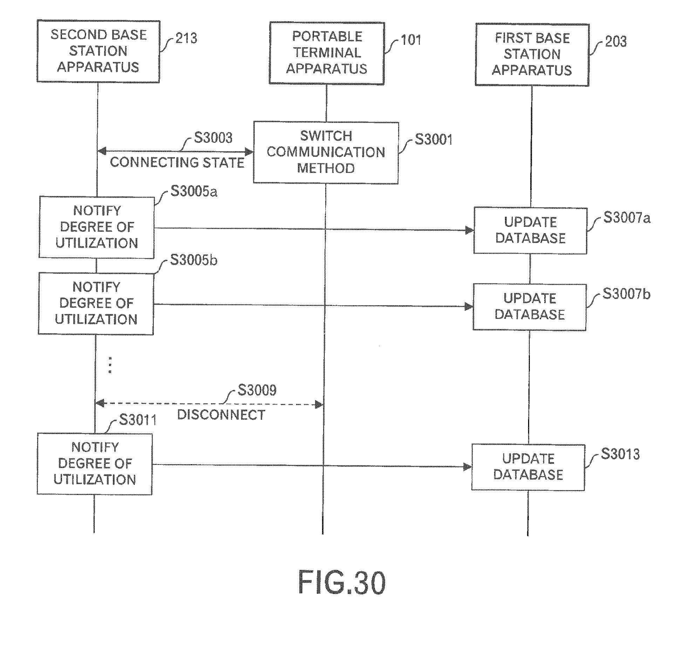

Next, a sequence for the database update will be explained by using FIG. 30. For example, when the portable terminal apparatus 101 switches the connection of the communication system (S3001), the secondbase station apparatus 213 is being connected with the portable terminal apparatus 101 (S3003).

Then, the second base station apparatus 213 notifies the first base station apparatus 203 of its own degree of utilization through the aforementioned route (S3005a). The first base station apparatus 203 updates the database 1005 when receiving the degree of utilization (S3007a).

After that, the second base station apparatus 213 notifies the first base station apparatus 203 of its own degree of utilization through the aforementioned route any time (S3005b). The first base station apparatus 203 updates the database 1005 when receiving the degree of utilization any time (S3007b).

When the connection between the second base station apparatus 213 and the portable terminal apparatus 101 is disconnected (S3009), the second base station apparatus 213 notifies the first base station apparatus 203 of its own degree of utilization through the aforementioned route (S3011). The first base station apparatus 203 updates the database 1005 when receiving the degree of utilization (S3013).

Thus, the first base station apparatus 203 holds the degree of utilization in each of the second base station apparatus 213 relating to the small cell 303 that overlaps with the macro cell 301 caused by this first base station apparatus 203.

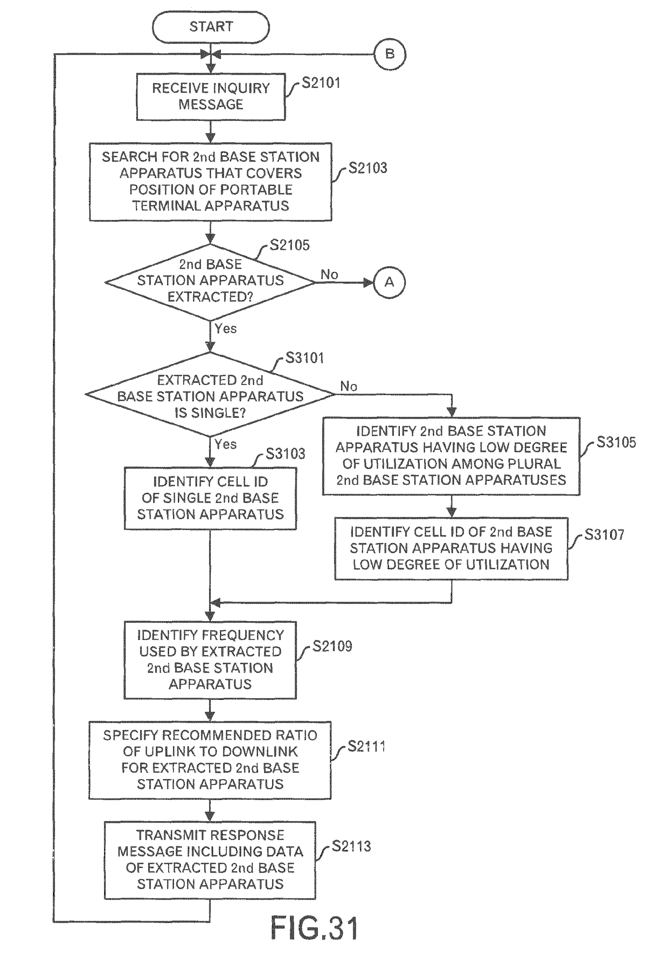

Next, the entire processing in the first base station apparatus 203 relating to the third embodiment will be explained by using FIG. 31. Similarly to FIGs. 21 and 24, the receiver 1001 receives the inquiry message (S2101). The identifying unit searches the database 1005 for the second base station apparatus 213 that covers the position of the portable terminal apparatus 101 based on the position data included in the inquiry message (S2103).

Moreover, the identifying unit 1003 determines whether or not there is a second base station apparatus 213 that covers the position of the portable terminal apparatus 101 (S2105). When it is determined that there is no second base station apparatus 213 that covers the position of the portable terminal apparatus 101, the processing shifts to the processing illustrated in FIG. 25 through the terminal A, similarly to FIG. 24.

When it is determined that there is the second base station apparatus 213 that covers the position of the portable terminal apparatus 101, the identifying unit 1003 determines whether or not the number of second base station apparatuses that cover the position of the portable terminal apparatus 101 is one (S3101). When it is determined that the number of second base station apparatuses 213 that cover the position of the portable terminal apparatus 101 is one, the identified unit 1003 identifies the cell ID of the single second base station apparatus 213 (S3103). This processing corresponds to the processing of S2107 in FIGs. 21 and 24.

When it is determined that the number of second base station apparatuses 213 that cover the position of the portable terminal apparatus 101 is not single, in other words, when it is determined that there are plural second base station apparatuses 213 that cover the position of the portable terminal apparatus 101, the identifying unit 1003 identifies the second base station apparatus 213 whose degree of utilization is lower in the database 1005 among the plural second base station apparatuses 213 (S3105) . Then, the identifying unit 1003 identifies the cell ID of the second base station apparatus 213 whose degree of utilization is lower (S3107). For example, when the second base station apparatus 213 identified by the cell ID "C021" of the fifth record illustrated in FIG. 27 and the second base station apparatus 213 identified by the cell ID "C022" of the sixth record are detected, the cell ID "C022" whose degree of utilization is lower is identified.

The second base station apparatus 213 whose degree of utilization is lower has enough room, so it is easy to respond to a connection request from the portable terminal apparatus 101. The second base station apparatus 213 whose degree of utilization is higher has little room, so it is difficult to respond to a connection request from the portable terminal apparatus 101.

The processing of S2109 to S2113 is similar to those in FIGs. 21 and 24.

According to this embodiment, because the portable terminal apparatus 101 is caused to search for the second base station apparatus 213 that is easy to be connected, the waste search for the second base station apparatus 213 that is difficult to be connected is avoided, and it is possible to suppress the power consumption of the portable terminal apparatus 101.

### [Embodiment 4]

In the aforementioned embodiments, the first base station apparatus 203 has the database 1005 for the second base station apparatuses 213, and the first base station apparatus 203 generates the response message. However, in this embodiment, the first management apparatus 2801, the first gateway 209 or the integrated management apparatus 2901 has the database 1005 for the second base station apparatuses 213, and the first management apparatus 2801, the first gateway 209 or the integrated management apparatus 2901 generates the response message as one example.

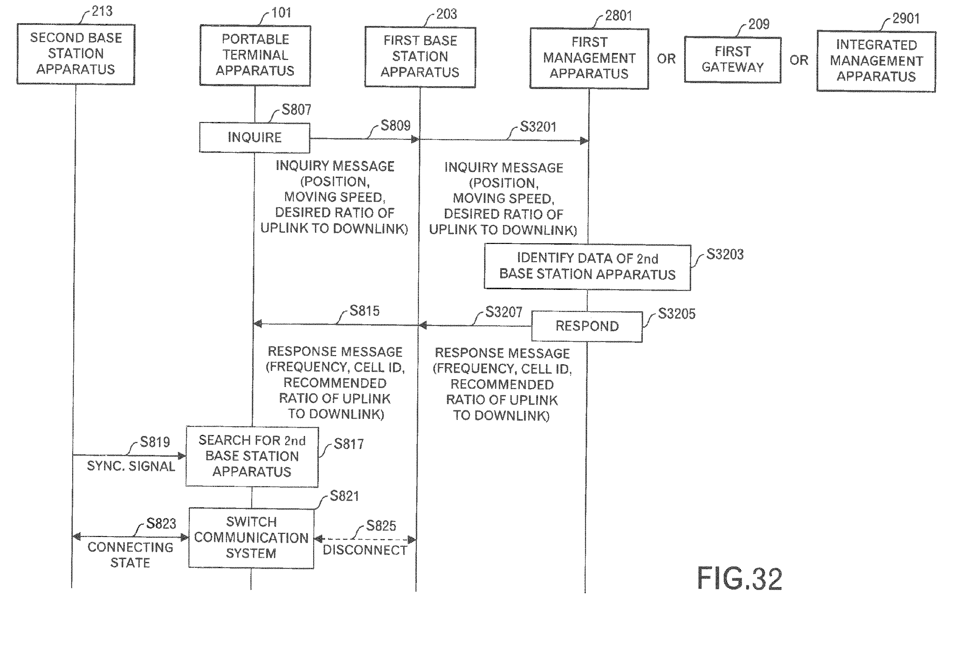

The entire sequence relating to the fourth embodiment will be explained by using FIG. 32. Similarly to FIG. 8, the portable terminal apparatus 101 inquires (S807). The transmitted inquiry message is the same as that in S809 in FIG. 8.

When the first base station apparatus 203 receives the inquiry message from the portable terminal apparatus 101, the first base station apparatus 203 transfers the inquiry message to the first management apparatus 2801, the first gateway 209 or the integrated management apparatus 2901, which has the database 1005 (S3201).

The first management apparatus 2801, the first gateway 209 or the integrated management apparatus 2901, which received the inquiry message, identifies data of the second base station apparatus from the database 1005 (S3203), and transmits a response (S3205). The response message (S3207) is the same as the response message in S815 of FIG. 8.

When the first base station apparatus 2 03 receives the response message, the first base station apparatus 203 transfers the received response message to the portable terminal apparatus 101 (S815). The processing of S815 to S825 is the same as those in FIG. 8.

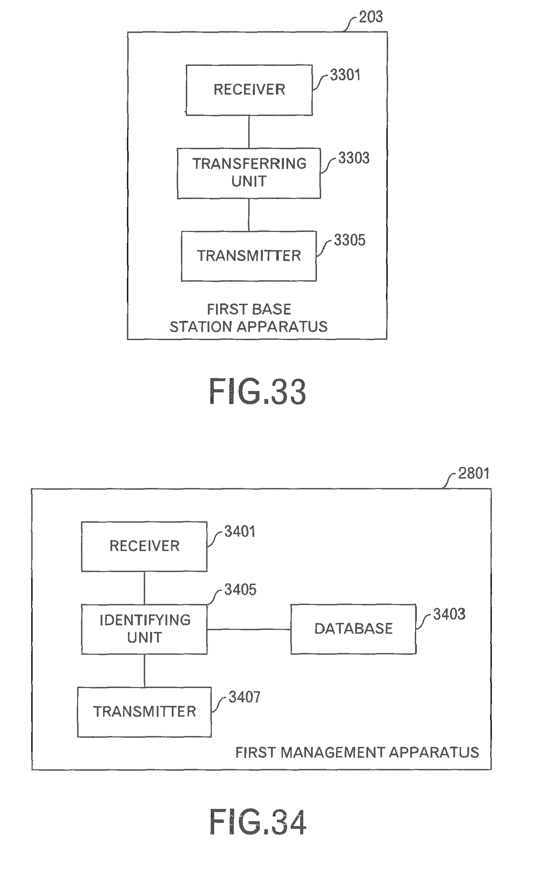

Next, the module configuration of the first base station apparatus 203 relating to the fourth embodiment will be explained by using FIG. 33. The first base station apparatus 203 has a receiver 3301, a transfer unit 3303 and a transmitter 3305. The receiver 3301 receives the inquiry message from the portable terminal apparatus 101. The transfer unit 3303 transfers the inquiry message to the first management apparatus 2801, the first gateway 209 or the integrated management apparatus 2901, which has the database 1005. Furthermore, the receiver 3301 receives the response message from the first management apparatus 2801, the first gateway 209 or the integrated management apparatus 2901. The transmitter 3305 transmits the received response message to the portable terminal apparatus 101.

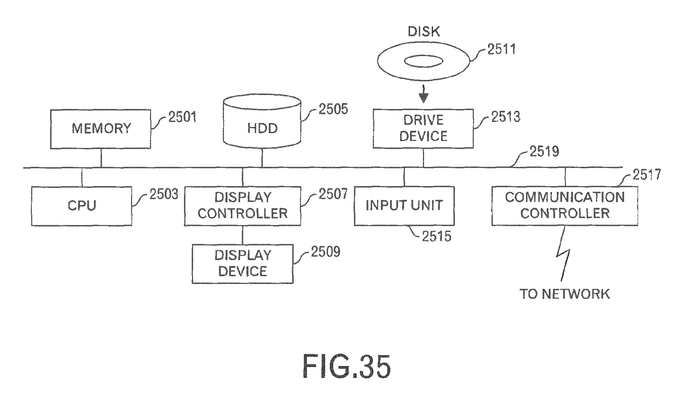

The receiver 3301, transfer unit 3303 and transmitter 3305 are realized by a combination of the hardware illustrated in FIG. 35, which will be explained later, and programs being executed.

Next, a module configuration of the first management apparatus 2801 will be explained by using FIG. 34. The first management apparatus 2801 has a receiver 3401, a database 3403, an identifying unit 3405 and a transmitter 3407. The receiver 3401 receives the inquiry message transferred from the first base station apparatus 203. The database 3403 holds data corresponding to the database 1005 illustrated in FIG. 11 or 27. The database 3403 separately holds data for each first base station apparatus 203. The identifying unit 3405 uses the data for the first base station apparatus 203 that is a transfer source of the inquiry message in the database 3403 to identify the data of the second base station apparatus 213.

The receiver 3401, the database 3403, the identifying unit 3405 and the transmitter 3407 are realized by the hardware resources illustrated in FIG. 35, which will be explained later and programs being executed.

When the integrated management apparatus 2901 has the database, the module configuration of the integrated management apparatus 2901 is similar to the module configuration in FIG. 34. When the first gateway 209 has the database, the module configuration of the first gateway 209 is similar to the module configuration in FIG. 34.

According to this embodiment, the processing load in the first base station apparatus 203 is reduced.

Although the embodiments of this invention were explained, this invention is not limited to those embodiments. For example, the aforementioned functional block configuration does not always correspond to a program module configuration.

Moreover, the aforementioned configurations of the respective memory areas are mere examples, and the configuration may be changed. Furthermore, as for the processing flows, as long as the processing results do not change, the turn of steps may be exchanged or plural steps may be executed in parallel.

In addition, the aforementioned the first base station apparatus 203, the first management apparatus 2801, the first gateway 209 and the integrated management apparatus 2901 are computer devices as illustrated in FIG. 35. That is, a memory 2501 (storage device), a CPU 2503 (processor), a hard disk drive (HDD) 2505, a display controller 2507 connected to a display device 2509, a drive device 2513 for a removable disk 2511, an input unit 2515, and a communication controller 2517 for connection with a network are connected through a bus 2519 as illustrates in FIG. 35. An operating system (OS) and an application program for carrying out the foregoing processing in the embodiment, are stored in the HDD 2505, and when executed by the CPU 2503, they are read out from the HDD 2505 to the memory 2501. As the need arises, the CPU 2503 controls the display controller 2507, the communication controller 2517, and the drive device 2513, and causes them to perform predetermined operations. Moreover, intermediate processing data is stored in the memory 2501, and if necessary, it is stored in the HDD 2505. In this embodiment of this technique, the application program to realize the aforementioned functions is stored in the computer-readable, non-transitory removable disk 2511 and distributed, and then it is installed into the HDD 2505 from the drive device 2513. It may be installed into the HDD 2505 via the network such as the Internet and the communication controller 2517. In the computer as stated above, the hardware such as the CPU 2503 and the memory 2501, the OS and the application programs systematically cooperate with each other, so that various functions as described above in details are realized.

The aforementioned embodiments are outlined as follows:
A portable terminal apparatus relating to the embodiments includes: (A) a determination unit that determines whether switching from a connection with a first wireless communication system to a connection with a second wireless communication system is effective, based on a communication state with a first base station apparatus included in the first wireless communication system or a moving state of the portable terminal apparatus itself; (B) a transmission unit that transmits, upon determining that the switching is effective, a message to inquire a second base station apparatus included in the second wireless communication system, to the first base station apparatus, and omits, upon determining that the switching is not effective, transmission of the message; and (C) a search unit that searches, upon receiving data for searching for the second base station apparatus from the first base station apparatus, for the second base station apparatus according to the received data.

Thus, in a state that the switching from the connection with the first wireless communication system to the connection with the second wireless communication system is not effective, it is possible to omit the search for the second base station apparatus and suppress the power consumption of the portable terminal apparatus. Furthermore, it is possible to suppress the power consumption relating to the transmission of the message to the first base station apparatus.

Furthermore, the aforementioned determination unit may determine that the switching is not effective, upon detecting that a moving speed of the portable terminal apparatus itself exceeds a first criterion.

Thus, when the possibility is high that the portable terminal apparatus goes out of the cell created by the second wireless communication system soon because the portable terminal apparatus is moving at high speed, it is possible to omit the search for the second base station apparatus, and suppress the power consumption of the portable terminal apparatus. Furthermore, it is possible to suppress the power consumption relating to the transmission of the message to the first base station apparatus.

Furthermore, the aforementioned determination unit may determine that the switching is not effective, upon detecting an amount of communication traffic of downlink data received from the first base station apparatus is less than a second criterion.

Thus, when the contribution to the reduction of the transfer load of the downlink data in the first wireless communication system is small, it is possible to omit the search for the second base station apparatus, and suppress the power consumption of the portable terminal apparatus. Furthermore, it is possible to suppress the power consumption relating to the transmission of the message to the first base station apparatus.

Moreover, the aforementioned determination unit may determine that the switching is not effective, upon detecting an amount of communication traffic of uplink data transmitted to the first base station apparatus is less than a third criterion.

Thus, when the contribution to the reduction of the load relating to the transfer of the uplink data in the first wireless communication system is small, it is possible to omit the search for the second base station apparatus, and suppress the power consumption of the portable terminal apparatus. Furthermore, it is possible to suppress the power consumption relating to the transmission of the message to the first base station apparatus.

A base station apparatus relating to the embodiments is a first base station apparatus included in the first wireless communication system, and includes (A) a receiving unit that receives a message that includes data representing a position of a portable terminal apparatus and inquires a second base station apparatus included in a second wireless communication system, from the portable terminal apparatus; and (B) a transmission unit that selects, upon detecting that there are plural cells, each of which is created by a second wireless communication system and covers the position identified by the received message, one of plural second base station apparatuses for the plural cells, based on degrees of utilization of the plural second base station apparatuses, and transmits data to search for the selected second base station apparatus to the portable terminal apparatus.

By doing so, the portable terminal apparatus is caused to search for the second base station apparatus that is easy to connect. Therefore, it is possible to avoid the wasteful search for the second base station apparatus that is difficult to connect, and suppress the power consumption of the portable terminal apparatus.

A communication control system relating to the embodiments includes: a portable terminal apparatus; and a first base station apparatus included in a first wireless communication system. The portable terminal apparatus is configured to: determine whether switching fromaconnectionwitha first wireless communication system to a connection with a second wireless communication system is effective, based on a communication state with the first base station apparatus included in the first wireless communication system or a moving state of the portable terminal apparatus itself; upon determining that the switching is effective, transmit a message to inquire a second base station apparatus included in the second wireless communication system to the first base station apparatus; and upon determining that the switching is not effective, omit the transmitting. The first base station apparatus is configured to: upon receiving the message and detecting that there is a cell that is created by the second wireless communication system and covers the position identified by the received message, transmit first data to search for the second base station apparatus of the cell to the portable terminal apparatus. The portable terminal apparatus is further configured to: upon receiving the first data from the first base station apparatus, search for the second base station apparatus according to the received first data.

Thus, in a state that the switching from the connection with the first wireless communication system to the connection with the second wireless communication system is not effective, it is possible to omit the search for the second base station apparatus and suppress the power consumption of the portable terminal apparatus. Furthermore, it is possible to suppress the power consumption relating to the transmission of the message to the first base station apparatus.

Moreover, the first base station apparatus may be further configured to: upon detecting that there is no cell, identify an adjacent cell that is created by the second wireless communication system and is adjacent to the position; and transmit second data to search for a second base station apparatus for the identified adjacent cell to the portable terminal apparatus. Moreover, the portable terminal apparatus may be configured to: upon receiving the second data from the first base station apparatus, search for the second base station apparatus according to the second data after waiting for a predetermined time or more.

Thus, when the portable terminal apparatus moves from a place that is not included in any cell to a place within an adjacent cell, the second base station apparatus is detected without performing the determination processing of whether or not the switching of the connection is effective. Therefore, it is possible to suppress the power consumption relating to the determination processing in the portable terminal apparatus.

Incidentally, it is possible to create a program causing a processor to execute the aforementioned processing, and such a program is stored in a computer readable storage medium or storage device such as a flexible disk, CD-ROM, DVD-ROM, magneto-optic disk, a semiconductor memory, and hard disk. Inaddition, the intermediate processing result is temporarily stored in a storage device such as a main memory or the like.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the spirit and scope of the invention.

## Claims

1. A portable terminal apparatus, comprising:
a determination unit that determines whether switching from a connection with a first wireless communication system to a connection with a second wireless communication system is effective, based on a communication state with a first base station apparatus included in the first wireless communication system or a moving state of the portable terminal apparatus itself;
a transmission unit that transmits, upon determining that the switching is effective, a message to inquire a second base station apparatus included in the second wireless communication system, to the first base station apparatus, and omits, upon determining that the switching is not effective, transmission of the message; and
a search unit that searches, upon receiving data for searching for the second base station apparatus from the first base station apparatus, for the second base station apparatus according to the received data.

2. The portable terminal apparatus as set forth in claim 1, wherein the determination unit determines that the switching is not effective, upon detecting that a moving speed of the portable terminal apparatus itself exceeds a first criterion.

3. The portable terminal apparatus as set forth in claim 1 or 2, wherein the determination unit determines that the switching is not effective, upon detecting an amount of communication traffic of downlink data received from the first base station apparatus is less than a second criterion.

4. The portable terminal apparatus as set forth in claim 1, 2 or 3, wherein the determination unit determines that the switching is not effective, upon detecting an amount of communication traffic of uplink data transmitted to the first base station apparatus is less than a third criterion.

5. A first base station apparatus included in a first wireless communication system, the first base station apparatus comprising:
a receivingunit that receives a message that includes data representing a position of a portable terminal apparatus and inquires a second base station apparatus included in a second wireless communication system, from the portable terminal apparatus; and
a transmission unit that selects, upon detecting that there are plural cells, each of which is created by a second wireless communication system and covers the position identified by the received message, one of plural second base station apparatuses for the plural cells, based on degrees of utilization of the plural second base station apparatuses, and transmits data to search for the selected second base station apparatus to the portable terminal apparatus.

6. A communication control system, comprising:
a portable terminal apparatus; and
a first base station apparatus included in a first wireless communication system, and
wherein the portable terminal apparatus is configured to:
determine whether switching from a connection with the first wireless communication system to a connection with a second wireless communication system is effective, based on a communication state with the first base station apparatus included in the first wireless communication system or a moving state of the portable terminal apparatus itself;
upon determining that the switching is effective, transmit a message to inquire a second base station apparatus included in the second wireless communication system to the first base station apparatus; and
upon determining that the switching is not effective, omit the transmitting, and
wherein the first base station apparatus is configured to:
upon receiving the message and detecting that there is a cell that is created by the second wireless communication system and covers the position identified by the received message, transmit first data to search for the second base station apparatus of the cell to the portable terminal apparatus, and
wherein the portable terminal apparatus is further configured to:
upon receiving the first data from the first base station apparatus, search for the second base station apparatus according to the received first data.

7. The communication control system as set forth in claim 6, wherein the first base station apparatus is further configured to:
upon detecting that there is no cell, identify an adjacent cell that is created by the second wireless communication system and is adjacent to the position; and
transmit second data to search for a second base station apparatus for the identified adjacent cell to the portable terminal apparatus, and
wherein the portable terminal apparatus is configured to:
upon receiving the second data from the first base station apparatus, search for the second base station apparatus according to the second data after waiting for a predetermined time or more.

8. A communication control method, comprising:
determining, by a portable terminal apparatus, whether switching from a connection with a first wireless communication system to a connection with a second wireless communication system is effective, based on a communication state with the first wireless communication system or a moving state of the portable terminal apparatus itself;
upon determining that the switching is effective, transmitting, by the portable terminal apparatus, a message to inquire a second base station apparatus included in the second wireless communication system to the first wireless communication system;
upon determining that the switching is not effective, controlling, by the portable terminal apparatus, not to transmit the message;
receiving, by the first wireless communication system, the message;
upon detecting that there is a cell that is related to the second wireless communication system and covers the position identified by the received message, transmitting, by the first wireless communication system, data to search for the secondbase station apparatus of the cell to the portable terminal apparatus, and
searching, by the portable terminal apparatus, for the second base station apparatus according to the received data.

9. A communication control system comprising:
a portable terminal apparatus according to any of claims 1 to 4; and
a first base station apparatus according to claim 5. ',
